(19) Europäisches Patentamt / European Patent Office / Office européen des brevets

(11) **EP 4 349 117 B1**

(12) **EUROPEAN PATENT SPECIFICATION**

(45) Date of publication and mention
of the grant of the patent:
**24.12.2025 Bulletin 2025/52**

(21) Application number: **21943364.6**

(22) Date of filing: **29.05.2021**

(51) International Patent Classification (IPC):
*H04W 74/00* (2009.01)   *H04L 5/00* (2006.01)
*H04L 27/00* (2006.01)   *H04W 74/0833* (2024.01)
*H04W 74/0836* (2024.01)

(52) Cooperative Patent Classification (CPC):
**H04W 74/0833; H04L 5/0053; H04L 27/0014;**
H04L 5/0007; H04L 2027/0026; H04W 74/0836

(86) International application number:
**PCT/CN2021/097028**

(87) International publication number:
**WO 2022/251982 (08.12.2022 Gazette 2022/49)**

(54) **MESSAGE 1 CFO COMPENSATION METHOD BASED ON RAPID MISMATCH**

NACHRICHTEN-1-FO-KOMPENSATIONSVERFAHREN AUF DER BASIS SCHNELLER FEHLANPASSUNGEN

PROCÉDÉ DE COMPENSATION DE DÉCALAGE DE FRÉQUENCE PORTEUSE (CFO) DE MESSAGE 1 BASÉ SUR UNE DÉSADAPTATION D'IDENTIFIANT DE PRÉAMBULE D'ACCÈS ALÉATOIRE (RAPID)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2024 Bulletin 2024/15**

(73) Proprietor: **QUALCOMM INCORPORATED**
**San Diego, California 92121-1714 (US)**

(72) Inventors:
• **YAN, Yuyu**
  **San Diego, California 92121-1714 (US)**
• **HONG, Liang**
  **San Diego, California 92121-1714 (US)**
• **MAO, Jie**
  **San Diego, California 92121-1714 (US)**
• **AYDIN, Levent**
  **San Diego, California 92121-1714 (US)**
• **KOKEN, Erman**
  **San Diego, California 92121-1714 (US)**
• **WU, Yongle**
  **San Diego, California 92121-1714 (US)**
• **YUAN, Rebecca Wen-Ling**
  **San Diego, California 92121-1714 (US)**
• **AHMAD, Ziad**
  **San Diego, California 92121-1714 (US)**
• **BANISTER, Brian Clarke**
  **San Diego, California 92121-1714 (US)**
• **MANTRAVADI, Ashok**
  **San Diego, California 92121-1714 (US)**
• **WU, Nanrun**
  **California 92121-1714 (US)**
• **WANG, XinYu**
  **San Diego, California 92121-1714 (US)**
• **ZHU, Jie**
  **San Diego, California 92121-1714 (US)**

(74) Representative: **Tomkins & Co**
**5 Dartmouth Road**
**Dublin 6, D06 F9C7 (IE)**

(56) References cited:
WO-A1-2020/166958    CN-A- 109 587 819
US-A1- 2017 289 834    US-A1- 2019 380 151

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **SAMSUNG: "Uplink timing advance/RACH procedure and Initial Access for NTN", 3GPP DRAFT; R1-1906953_INITIAL AND RANDOM_ACCESS_FOR_NTN_SS_V1, vol. RAN WG1, 3 May 2019 (2019-05-03), Reno, USA, pages 1 - 8, XP051708988**

**Description**

**BACKGROUND**

**Technical Field**

The present disclosure generally relates to communication systems, and more particularly, to a wireless communication system between a user equipment (UE) and a base station.

**Introduction**

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

United States Patent Application Publication No. US 2017/289834 relates to random access handing in a single frequency network with a unidirectional antenna node arrangement. International Patent Application Publication No. WO 2020/166958 relates to methods for frequency offset tracking in NR mm wave for efficient beam management.

**SUMMARY**

The invention is defined by the subject-matter of the independent claims. Preferred embodiments are defined in the dependent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may be a UE. The UE obtains one or more random access responses (RARs). Each of the one or more RARs includes a random access preamble identifier (RAPID), and each of the one or more RARs is responsive to a random access message including a preamble. The UE determines, in each of a threshold number of the one or more RARs, that the RAPID of a corresponding RAR is different than an identifier of the preamble of a corresponding random access message. The UE offsets a carrier frequency for each of one or more subsequent random access messages in response to the determination.

To the accomplishment of the foregoing and related ends, the one or more aspects comprise the features hereinafter fully described and particularly pointed out in the claims. The following description and the annexed drawings set forth in detail certain illustrative features of the one or more aspects.

**BRIEF DESCRIPTION OF THE DRAWINGS**

FIG. 1 is a diagram illustrating an example of a wireless communications system and an access network.

FIG. 2A is a diagram illustrating an example of a first frame, in accordance with various aspects of the present disclosure.

FIG. 2B is a diagram illustrating an example of DL channels within a subframe, in accordance with various aspects of the present disclosure.

FIG. 2C is a diagram illustrating an example of a second frame, in accordance with various aspects of the present disclosure.

FIG. 2D is a diagram illustrating an example of UL channels within a subframe, in accordance with various aspects of the present disclosure.

FIG. 3 is a diagram illustrating an example of a base station and user equipment (UE) in an access network.

FIG. 4 is a diagram illustrating an example of a high-speed train deployment.

FIG. 5 is a diagram illustrating an example of a UE that compensates for uplink Doppler shift when performing a random access channel (RACH) procedure with a base station.

FIG. 6 is a diagram illustrating an example of a UE that transmits RACH preambles subject to an uplink Doppler shift in either a positive or negative frequency direction.

FIG. 7 is a diagram illustrating an example of a UE that offsets the carrier frequency for different RACH preambles to compensate for the uplink Doppler shift.

FIG. 8 is a diagram illustrating a call flow between a UE and a base station.

FIG. 9 is a flowchart of a method of wireless communication.

FIG. 10 is a diagram illustrating an example of a hardware implementation for an example apparatus.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

In a four-step contention-based RACH procedure, four messages may be provided between a UE and a base station. For example, during an initial attach procedure, a UE may send a preamble to the base station (e.g. message 1), receive a random access response (RAR) from the base station (e.g. message 2), send an RRC Connection Request message or other payload to the base station (e.g. message 3), and receive an RRC Connection Setup message or other transmission subject to contention resolution from the base station (e.g. message 4). This four-step RACH procedure can be simplified into a two-step RACH procedure in which the UE sends a preamble and a payload in a first message. For example, message A ("msgA") of a two-step RACH procedure may correspond to messages 1 and 3 of the four-step RACH procedure, and message B ("msgB") may correspond to messages 2 and 4 of the four-step RACH procedure. Thus, in the two-step RACH procedure, the UE may send the preamble followed by the payload in a msgA transmission to the base station, while the base station may send the RAR and the RRC response message in a msgB transmission to the UE.

The UE may select the preamble for message 1 or msgA from a set of random access preambles generated by the UE. The set of random access preambles may be a function of various configured RACH parameters, including a physical random access channel (PRACH) preamble format. The preamble format may in turn be associated with a PRACH preamble subcarrier spacing. After the UE selects a preamble from the set of generated preambles, the UE may transmit the preamble to the base station in configured time and frequency resources. The time and frequency resources may be a function of various configured RACH parameters. For example, the slots or symbols in which the preamble is transmitted may depend on a PRACH configuration index, and the subcarriers in which the preamble is transmitted may depend on the PRACH preamble subcarrier spacing.

After the UE transmits a selected preamble to the base station in the PRACH subcarriers (in message 1 or msgA), the base station may decode the message and identify the preamble transmitted by the UE. For example, the base station may receive and demodulate data in the PRACH subcarriers, and determine the UE's selected preamble sequence based on the subcarriers in which the PRACH data was received. In response to identifying the preamble, the base station may configure a RAR including a random access preamble identifier (RAPID). The base station may configure the RAPID with an identifier associated with the decoded preamble sequence (e.g., the preamble sequence determined to have been transmitted by the UE). The base station may then transmit the RAR to the UE in message 2 or msgB.

Once the UE receives and decodes the RAR, the UE may determine if the RAPID in the RAR is the same as the identifier associated with the UE's selected preamble sequence. If the RAPID matches the preamble, the UE may determine that the preamble was successfully received or that the RACH procedure has been successfully performed, and the UE may communicate with the base station accordingly. Otherwise, if the RAPID does not match the preamble (e.g., the RAPID is a mismatched RAPID), the UE may determine that the RACH procedure has failed, and the UE may restart the RACH procedure from message 1 or msgA.

One scenario in which mismatched RAPIDs may be observed are in high-speed train (HST) deployments. HSTs have recently developed as fast, convenient, environmentally friendly, and flexible means of transportation. As more and more passengers carrying UEs tend to travel on HSTs, new challenges have arisen in providing reliable communication services to accommodate growing communication demands. For example, typical HSTs may travel at speeds upwards of 200 kilometers per hour (km/h) or even upwards of 350 km/h, resulting in frequent and fast handovers, large Doppler spreads, and other effects. In attempt to overcome these challenges, millimeter-wave (mmW) and massive multiple-input multiple output (MIMO) technologies, as well as coordinated multipoint (CoMP) and mobile relay station architectures, have been considered for HST deployments.

However, notwithstanding such technologies, conventional HST deployments may still be insufficient in covering all possible scenarios that may arise in HSTs, including the mismatched RAPIDs described above. For example, UEs that are located in or on a HST (referred to herein as HST UEs) are often camped on non-HST cells (e.g., cells served by base stations located outside or away from a HST). As these non-HST cells have originally been designed to support UEs that are located outside of or away from a HST (referred to herein as non-HST UEs), the base stations serving these non-HST cells may configure HST UEs and non-HST UEs alike with similar RACH configurations. For example, a base station in a non-HST cell may provide both HST UEs and non-HST UEs a RACH configuration indicating PRACH preamble format 0 and employing an unrestricted set of preamble sequences. As a result, HST UEs camped on non-HST cells tend to experience frequent RACH failures due to mismatches between a RAPID in a RAR and the UE's selected preamble. These RAPID mismatches are typically due to the relatively small PRACH preamble subcarrier spacing (e.g., $\Delta f_{RA}$ = 1.25 kHz) associated with such preamble formats and the relatively large uplink, Doppler shift the HST UEs may experience when transmitting message 1 or msgA. Hence, it would be helpful to compensate for this uplink Doppler shift in order to improve RACH success rate for HST UEs.

Aspects of the present disclosure allow a UE to compensate for uplink Doppler shift when transmitting RACH preambles (e.g., in an HST). In one example, the UE may monitor a number N of consecutive RACH attempts (e.g., a 1st through Nth RACH attempt) for mismatched RAPIDs. For instance, the UE may obtain N consecutive RARs, where each RAR is responsive to a transmitted preamble, and the UE may determine if any of the RARs includes a RAPID that does not match the identifier of the corresponding preamble sequence transmitted by the UE. If the UE determines that a threshold number K of these RACH attempts fail due to mismatched RAPIDs in response to the aforementioned Doppler shift effect, the UE may compensate for this frequency offset in subsequent RACH attempts. For instance, if the UE determines that K out of N consecutive RARs include a RAPID that does not match the identifier of a corresponding preamble sequence due to a positive or negative Doppler shift, the UE may positively or negatively offset the carrier frequency of subsequent message 1's or msgA's (e.g., in RACH attempt N+1 and onward) to compensate for this Doppler shift. For example, if the UE has transmitted a preamble in RACH attempts 1 through N over a carrier frequency of 3.8 GHz, the UE may transmit a preamble in subsequent RACH attempt N+1 with a carrier frequency offset of 600 Hz (3.8000006 GHz) or -600 Hz (3.7999994 GHz). The UE may similarly transmit subsequent RACH preambles at carrier frequency offsets (positive or negative) until the base station successfully decodes the transmitted preamble and the UE receives a RAR having a RAPID that matches the transmitted preamble. As a result, the RACH success rate may be increased for HST UEs.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

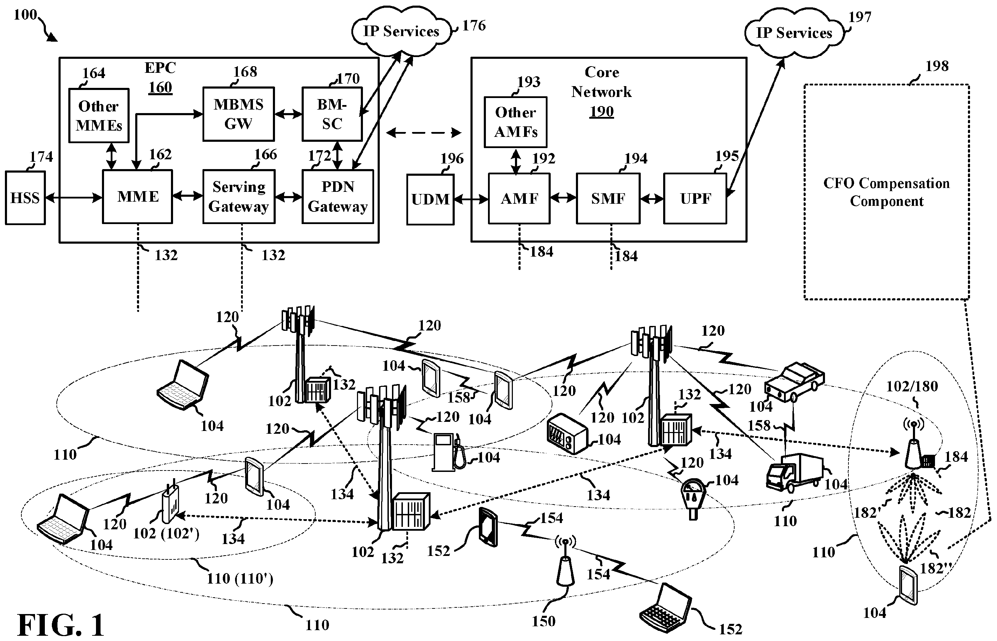

FIG. 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR) (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, Multimedia Broadcast Multicast Service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y megahertz (MHz) (e.g., 5, 10, 15, 20, 100, 400, etc. MHz) bandwidth per carrier allocated in a carrier aggregation of up to a total of $Yx$ MHz ($x$ component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a Packet Switch (PS) Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may focus on 5G NR, the concepts and various aspects described herein may be applicable to other similar areas, such as LTE, LTE-Advanced (LTE-A), Code Division Multiple Access (CDMA), Global System for Mobile communications (GSM), or other wireless/radio access technologies.

Referring again to FIG. 1, in certain aspects, the UE 104 may include a carrier frequency offset (CFO) compensation component 198 that is configured to obtain one or more RARs, where each of the one or more RARs includes a RAPID, and where each of the one or more RARs is responsive to a random access message including a preamble. The CFO compensation component 198 is also configured to determine, in each of a threshold number of the one or more RARs, that the RAPID of a corresponding RAR is different than the preamble of a corresponding random access message. The CFO compensation component 198 is further configured to offset a carrier frequency for each of one or more subsequent random access messages in response to the determination.

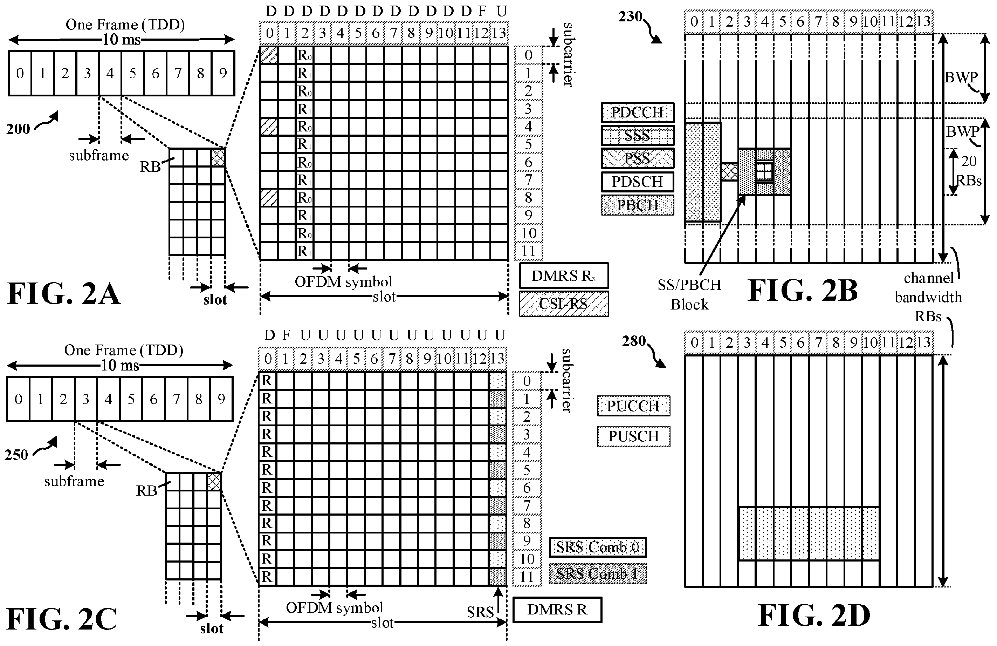

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) orthogonal frequency-division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies $\mu$ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology $\mu$, there are 14 symbols/slot and $2^\mu$ slots/subframe. The subcarrier spacing and symbol length/duration are a function of the numerology. The subcarrier spacing may be equal to $2^\mu * 15$ kilohertz (kHz), where $\mu$ is the numerology 0 to 4. As such, the numerology $\mu$=0 has a subcarrier spacing of 15 kHz and the numerology $\mu$=4 has a subcarrier spacing of 240 kHz. The symbol length/duration is inversely related to the subcarrier spacing. FIGs. 2A-2D provide an example of slot configuration 0 with 14 symbols per slot and numerology $\mu$=2 with 4 slots per subframe. The slot duration is 0.25 ms, the subcarrier spacing is 60 kHz, and the symbol duration is approximately 16.67 $\mu$s. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as $R_x$ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgement (ACK) / non-acknowledgement (NACK) feedback. The PUSCH carries data, and may additionally be used to carry a buffer status report (BSR), a power headroom report (PHR), and/or UCI.

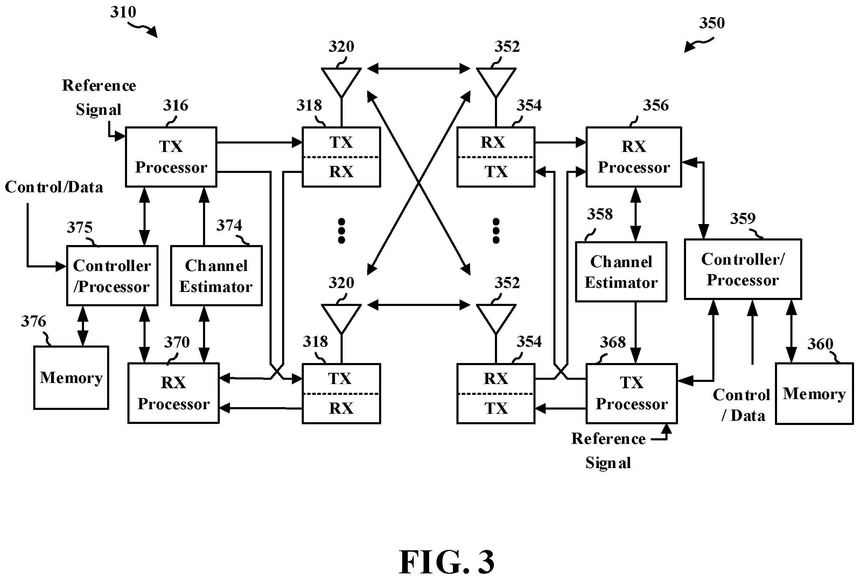

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with CFO compensation component 198 of FIG. 1.

In a four-step contention-based RACH procedure, four messages may be provided between a UE and a base station. For example, during an initial attach procedure, a UE may send a preamble to the base station (e.g. message 1), receive a RAR from the base station (e.g. message 2), send an RRC Connection Request message or other payload to the base station (e.g. message 3), and receive an RRC Connection Setup message or other transmission subject to contention resolution from the base station (e.g. message 4). This four-step RACH procedure can be simplified into a two-step RACH procedure in which the UE sends a preamble and a payload in a first message. For example, message A ("msgA") of a two-step RACH procedure may correspond to messages 1 and 3 of the four-step RACH procedure, and message B ("msgB") may correspond to messages 2 and 4 of the four-step RACH procedure. Thus, in the two-step RACH procedure, the UE may send the preamble followed by the payload in a msgA transmission to the base station, while the base station may send the RAR and the RRC response message in a msgB transmission to the UE.

The UE may select the preamble for message 1 or msgA from a set of random access preambles ($x_{u,v}(n)$) generated by the UE. The set of random access preambles may be a function of various configured RACH parameters. For example, the random access preambles may depend on at least a preamble sequence number ($u$) obtained from a logical root sequence index, a length ($L_{RA}$) associated with a physical random access channel (PRACH) preamble format, and a cyclic shift ($C_v$) of the logical root sequence. The preamble format may in turn be associated with a PRACH preamble subcarrier spacing ($\Delta f_{RA}$), a preamble length ($N_u$), a preamble cyclic prefix length ($N_{CP}^{RA}$), and support for restricted sets of preamble sequences, such as illustrated in the example below in Table 1. Moreover, for unrestricted sets of preamble sequences, the cyclic shift ($C_v$) may be a function of a cyclic shift parameter ($N_{CS}$), and for restricted sets of preamble sequences, the cyclic shift may be a function of $N_{CS}$ and a Doppler shift parameter ($d_u$).

Table 1 (assuming $L_{RA} = 839$ and $\Delta f_{RA} \in \{1.25, 5\}$ kHz

| Format | $L_{RA}$ | $\Delta f_{RA}$ | $N_u$ | $N_{CP}^{RA}$ | Support for restricted sets |
|--------|----------|-----------------|-------|---------------|------------------------------|
| 0 | 839 | 1.25 kHz | $24576\kappa$ | $3168\kappa$ | Type A, Type B |
| 1 | 839 | 1.25 kHz | $2 \cdot 24576\kappa$ | $21024\kappa$ | Type A, Type B |
| 2 | 839 | 1.25 kHz | $4 \cdot 24576\kappa$ | $4688\kappa$ | Type A, Type B |
| 3 | 39 | 5 kHz | $4 \cdot 6144\kappa$ | $3168\kappa$ | Type A, Type B |

After the UE selects a preamble from the set of generated preambles, the UE may transmit the preamble to the base station in configured time and frequency resources. The time and frequency resources may be a function of various configured RACH parameters. For example, the slots or symbols in which the preamble is transmitted may depend on a PRACH configuration index, and the subcarriers in which the preamble is transmitted may depend on the length ($L_{RA}$) and the PRACH preamble subcarrier spacing ($\Delta f_{RA}$). The subcarriers may be spread across the frequency domain according to a frequency-domain representation ($y_{u,v}(n)$) of the set of generated preamble sequences, which in turn are a function of the cyclic shift ($C_v$). Therefore, each preamble sequence in the set may be configured in the frequency domain across different combinations of PRACH subcarriers based on a respective cyclic shift, where each PRACH subcarrier is spaced apart from each other in frequency according to the PRACH preamble subcarrier spacing. As a result, adjacent PRACH subcarriers (separated by $\Delta f_{RA}$) may be configured for different preamble sequences, and the UE may transmit a selected preamble in the corresponding PRACH subcarriers for that preamble sequence.

After the UE transmits a selected preamble to the base station in the PRACH subcarriers (in message 1 or msgA), the base station may decode the message and identify the preamble transmitted by the UE. For example, the base station may receive and demodulate data in the PRACH subcarriers, and determine the UE's selected preamble sequence based on the subcarriers in which the PRACH data was received. In response to identifying the preamble, the base station may configure a RAR including a random access preamble identifier (RAPID). The base station may configure the RAPID with an identifier associated with the decoded preamble sequence (e.g., the preamble sequence determined to have been transmitted by the UE). The base station may then transmit the RAR to the UE in message 2 or msgB.

Once the UE receives and decodes the RAR, the UE may determine if the RAPID in the RAR is the same as the identifier associated with the UE's selected preamble sequence. If the RAPID matches the preamble, the UE may determine that the preamble was successfully received or that the RACH procedure has been successfully performed, and the UE may communicate with the base station accordingly. Otherwise, if the RAPID does not match the preamble (e.g., the RAPID is a mismatched RAPID), the UE may determine that the RACH procedure has failed, and the UE may restart the RACH procedure from message 1 or msgA.

One scenario in which mismatched RAPIDs may be observed are in HST deployments. HSTs have recently developed as fast, convenient, environmentally friendly, and flexible means of transportation. As more and more passengers carrying UEs tend to travel on HSTs, new challenges have arisen in providing reliable communication services to accommodate growing communication demands. For example, typical HSTs may travel at speeds upwards of 200 kilometers per hour (km/h) or even upwards of 350 km/h, resulting in frequent and fast handovers, large Doppler spreads, and other effects. In attempt to overcome these challenges, mmW and massive MIMO technologies, as well as CoMP and mobile relay station architectures, have been considered for HST deployments.

However, notwithstanding such technologies, conventional HST deployments may still be insufficient in covering all possible scenarios that may arise in HSTs, including the mismatched RAPIDs described above. For example, UEs that are located in or on a HST (referred to herein as HST UEs) are often camped on non-HST cells (e.g., cells served by base stations located outside or away from a HST). As these non-HST cells have originally been designed to support UEs that are located outside of or away from a HST (referred to herein as non-HST UEs), the base stations serving these non-HST cells may configure HST UEs and non-HST UEs alike with similar RACH configurations. For example, a base station in a non-HST cell may provide both HST UEs and non-HST UEs a RACH configuration indicating PRACH preamble format 0 (see Table 1 above) and employing an unrestricted set of preamble sequences. As a result, HST UEs camped on non-HST cells tend to experience frequent RACH failures due to mismatches between a RAPID in a RAR and the UE's selected preamble. These RAPID mismatches are typically due to the relatively small PRACH preamble subcarrier spacing (e.g., $\Delta f_{RA} = 1.25$ kHz) associated with such preamble formats and the relatively large uplink, Doppler shift the HST UEs may experience when transmitting message 1 or msgA.

Here, an uplink Doppler shift refers to a shift in frequency of a radio signal received by a base station relative to a motion of a transmitting UE. For example, if a stationary base station receives a RACH message over a 3.5 GHz carrier frequency from a HST UE in a HST travelling 200 km/h, the RACH message may undergo a Doppler shift or frequency offset varying between $\pm 600$ Hz. Moreover, if the stationary base station receives a RACH message over a 3.8 GHz carrier frequency from a HST UE in a HST travelling 350 km/h, the RACH message may undergo a Doppler shift or frequency offset varying between $\pm 1230$ Hz. Such Doppler shifts may be relatively large compared to the small preamble subcarrier spacing typically associated with common preamble formats for HST UEs and non-HST UEs. For example, if $\Delta f_{RA} = 1.25$ kHz, the base station may receive message 1 or msgA from a HST UE traveling on a 350 km/h HST with a frequency offset of nearly one PRACH subcarrier. In some cases, the frequency offset may even be larger, typically up to a maximum of two PRACH subcarriers. As a result of this frequency offset applied to the received signal, the base station may misidentify the transmitted preamble as a different preamble, resulting in the base station identifying a different RAPID and leading to eventual RACH failure. This misidentification may result from either a positive Doppler shift (e.g., where the preamble is received at a higher frequency than it is transmitted) or a negative Doppler shift (e.g., where the preamble is received at a lower frequency than it is transmitted). Hence, it would be helpful to compensate for these carrier frequency offsets in order to improve RACH success rate for HST UEs.

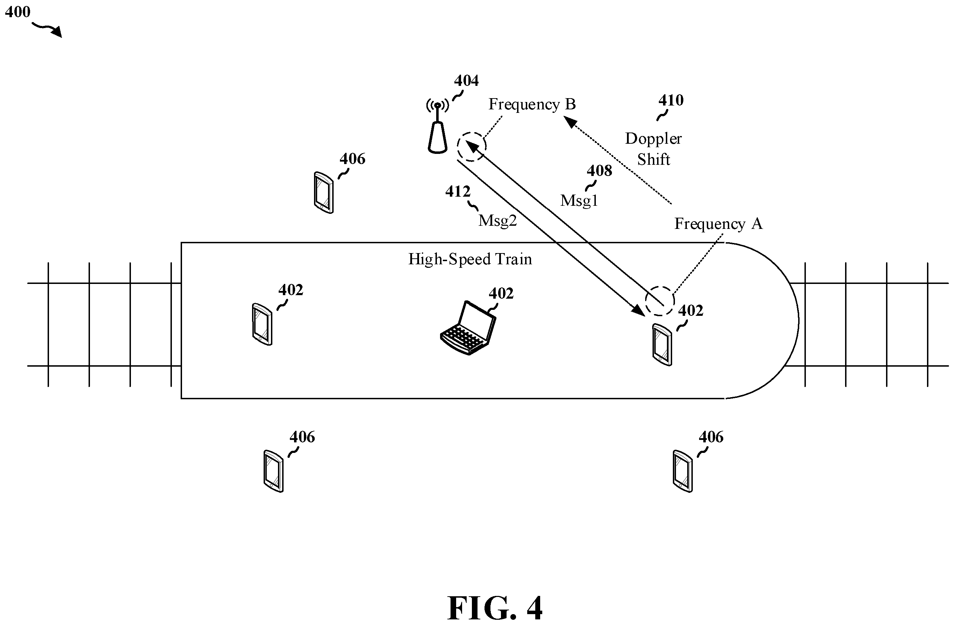

For instance, FIG. 4 illustrates an example 400 of a HST deployment in which UEs on a HST (HST UEs 402) may communicate with a base station 404 in a non-HST cell. The base station 404 may also communicate with UEs outside of the HST (non-HST UEs 406). During a RACH procedure, HST UE 402 may transmit a RACH message 408 (e.g., message 1 or msgA) including a preamble to base station 404 at a given frequency A. However, due to the high speed of the HST UE with respect to the base station, a Doppler shift 410 or frequency offset may be applied resulting in the RACH message being received by the base station at a different frequency B. As a result of this frequency offset, the base station 404 may identify an incorrect preamble and accordingly transmit a RAR 412 (e.g., message 2 or msgB) including an incorrect RAPID to the HST UE. As a result of the mismatch between the preamble in RACH message 408 and the RAPID in RAR 412, the RACH procedure may fail and the process may inefficiently repeat for subsequent RACH attempts.

To resolve this issue, aspects of the present disclosure allow a UE to compensate for uplink Doppler shift when transmitting RACH preambles (e.g., in an HST). In one example, the UE may monitor a number N of consecutive RACH attempts (e.g., a 1st through Nth RACH attempt) for mismatched RAPIDs. For instance, the UE may obtain N consecutive RARs, where each RAR is responsive to a transmitted preamble, and the UE may determine if any of the RARs includes a RAPID that does not match the identifier of the corresponding preamble sequence transmitted by the UE. If the UE determines that a threshold number K of these RACH attempts fail due to mismatched RAPIDs in response to the aforementioned Doppler shift effect, the UE may compensate for this frequency offset in subsequent RACH attempts. For instance, if the UE determines that K out of N consecutive RARs include a RAPID that does not match the identifier of a corresponding preamble sequence due to a positive or negative Doppler shift, the UE may positively or negatively offset the carrier frequency of subsequent message 1's or msgA's (e.g., in RACH attempt N+1 and onward) to compensate for this Doppler shift. For example, if the UE has transmitted a preamble in RACH attempts 1 through N over a carrier frequency of 3.8 GHz, the UE may transmit a preamble in subsequent RACH attempt N+1 with a carrier frequency offset of 600 Hz (3.8000006 GHz) or - 600 Hz (3.7999994 GHz). The UE may similarly transmit subsequent RACH preambles at different carrier frequency offsets (positive or negative) until the base station successfully decodes the transmitted preamble and the UE receives a RAR having a RAPID that matches the transmitted preamble. As a result, the RACH success rate may be increased for HST UEs.

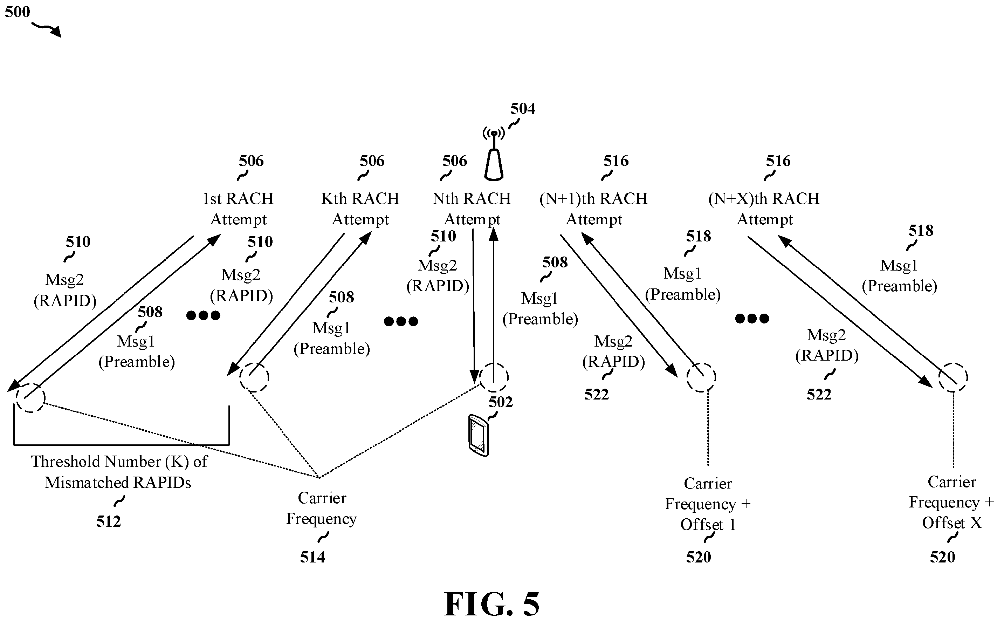

FIG. 5 illustrates an example 500 of a UE 502 that compensates for uplink Doppler shift when performing a RACH procedure with a base station 504. UE 502 may correspond to HST UE 402 of FIG. 4, and base station 504 may correspond to base station 404 of FIG. 4. Initially, the UE 502 may monitor up to N consecutive RACH attempts, where in each RACH attempt 506, the UE transmits a RACH message 508 (e.g., message 1 or msgA) to the base station 504 and receives a RAR 510 (e.g., message 2 or msgB) from the base station. Each RACH message 508 may include a preamble selected by the UE 502, and each RAR 510 may include a RAPID configured by the base station 504. The number N may be a configurable value that is a function of a maximum number of preamble transmissions configured for the UE. The maximum number of preamble transmissions may be configured via the parameter *preambleTransMax,* which the base station may signal to the UE in an RRC message. For example, the base station may configure N = minimum *(preambleTransMax,* 10).

For each RACH attempt 506 where the UE 502 receives the RAPID in a RAR 510, the UE checks whether the RAPID matches the preamble in the corresponding RACH message 508. If the UE 502 determines that a threshold number 512 of the RACH attempts 506 (e.g., K RACH attempts within N consecutive RACH attempts) has failed due to a mismatched RAPID (e.g., the RAPID does not match the preamble in each of the K attempts), the UE may determine whether each of these failed attempts is due to an uplink Doppler shift or offset in a carrier frequency 514 for each RACH message 508. The threshold number K may include any combination of consecutive or inconsecutive RACH attempts within the N consecutive RACH attempts. For instance, if N = 10 and K = 5, the threshold number of RACH attempts may include five different RACH attempts 1-5; RACH attempts 3-7; RACH attempts 6-10; RACH attempts 1, 3, 5, 7, 9; RACH attempts 2, 4, 6, 8, 10; RACH attempts 3, 4, 7, 9, 10, or any other combination of K different RACH attempts within the N consecutive RACH attempts.

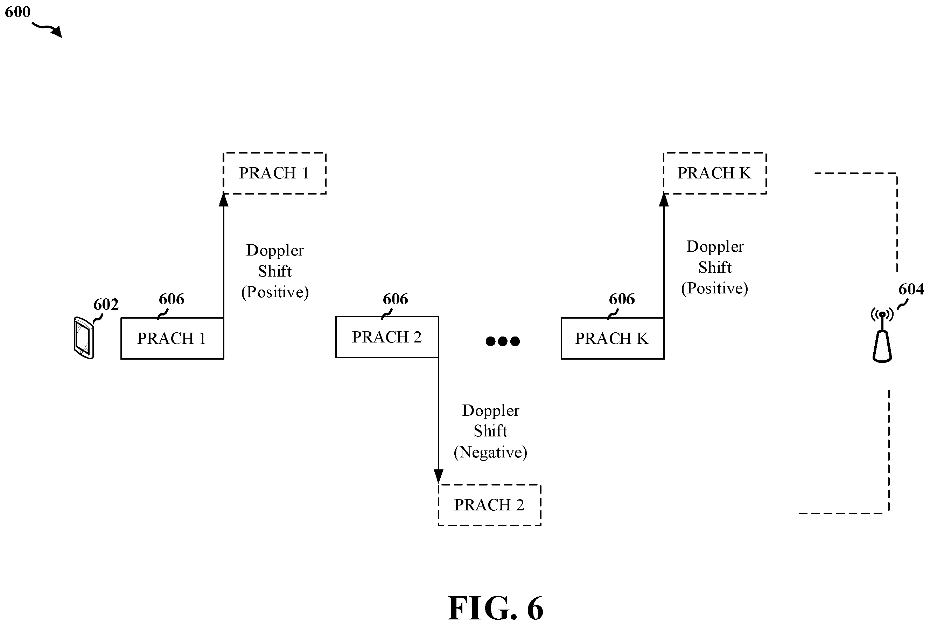

The UE may also determine how many (if any) of these K RACH attempts includes a Doppler shift in the positive direction (represented by the number K1), and how many (if any) of these K RACH attempts includes a Doppler shift in the negative direction (represented by the number K2), where K = K1 + K2. For instance, FIG. 6 illustrates an example 600 of a UE 602 that transmits RACH preambles to a base station 604, where the RACH preambles carried in PRACH 606 are each subject to an uplink Doppler shift in either the positive (K1) or negative (K2) direction. UE 602 may correspond to HST UE 402 and UE 502 of FIGs. 4 and 5, and base station 604 may correspond to base station 404, 504 of FIGs. 4 and 5. In this example, when UE 602 transmits the RACH preamble for RACH attempt 1 in PRACH 1, PRACH 1 may undergo a positive Doppler shift such that base station 604 receives PRACH 1 at a higher frequency than transmitted. As a result, the base station may misidentify PRACH 1 as including a different preamble and configure an incorrect RAPID accordingly. Thus, PRACH 1 may be included in the K1 total. Similarly, when the UE 602 transmits the RACH preamble for RACH attempt 2 in PRACH 2, PRACH 2 may undergo a negative Doppler shift such that base station 604 receives PRACH 2 at a lower frequency than transmitted. As a result, the base station may similarly misidentify PRACH 2 as including a different preamble and configure an incorrect RAPID accordingly. Thus, PRACH 2 may be included in the K2 total. The UE may continue to transmit RACH preambles in PRACHs for the other RACH attempts, where each PRACH may be subject to either a positive or negative Doppler shift.

In one example, the UE may determine whether a RAPID mismatch is caused by the uplink Doppler shift effect, as well as the direction of the Doppler shift (positive or negative), based on an expected RAPID at the base station. For instance, the UE may apply the following formulas to determine the existence and direction of the Doppler shift or carrier frequency offset (CFO):

$$RAPID_0 \stackrel{\text{def}}{=} \left\lfloor \frac{RAPID_{UE}}{V} \right\rfloor V \qquad (1)$$

where $RAPID_0$ represents the RAPID for root $u$ with cyclic shift $C_v$=0;

$$v_{UE} \stackrel{\text{def}}{=} RAPID_{UE} \bmod V; \qquad (2)$$

where $v_{UE}$ represents the cyclic shift index of $RAPID_{UE}$;

$$\tilde{d}_{pos} \stackrel{\text{def}}{=} (v_{UE} N_{CS} - d_u) \bmod L_{RA} \qquad (3)$$

where $\tilde{d}_{pos}$ represents the shift relative to $RAPID_0$ for CFO>0 (positive Doppler shift);

$$\tilde{d}_{neg} \stackrel{\text{def}}{=} (v_{UE} N_{CS} + d_u) \bmod L_{RA} \qquad (4)$$

where $\tilde{d}_{neg}$ represents the shift relative to $RAPID_0$ for CFO<0 (negative Doppler shift);

For $l \in \{0,1, ..., L_{RA} - 1\}$, define:

$$g(l) \stackrel{\text{def}}{=} \begin{cases} \left\lceil \frac{l}{N_{CS}} \right\rceil, & 0 \le l < (V-1)N_{CS} \\ 0, & otherwise \end{cases} \qquad (5)$$

where $g$ represents the mapping to RAPID;

For delay $d_D$, the expected RAPID at receiver is

$$RAPID_{pos}(d_D) = RAPID_0 + g((\tilde{d}_{pos} - d_D) \bmod L_{RA})$$

$$RAPID_{neg}(d_D) = RAPID_0 + g((\tilde{d}_{neg} - d_D) \bmod L_{RA}) \quad (6)$$

where $g((\tilde{d}_{pos} - d_D)\bmod L_{RA})$ or $g((\tilde{d}_{neg} - d_D)\bmod L_{RA})$ represent the total shift relative to $RAPID_0$; and

$$RAPID_{pos} \overset{\text{def}}{=} \left\{ RAPID_{pos}(0),\ RAPID_{pos}(N_{CS} - 1) \right\}$$

$$RAPID_{neg} \overset{\text{def}}{=} \left\{ RAPID_{neg}(0),\ RAPID_{neg}(N_{CS} - 1) \right\} \qquad (7)$$

where $RAPID_{pos}$ and $RAPID_{neg}$ represent the possible received RAPIDs for $0 \le d_D \le N_{CS} - 1$ for positive and negative frequency offsets, respectively.

Upon determining the expected RAPID ($RAPID_{pos}$ and $RAPID_{neg}$), and the actual RAPID received in RAR from the base station ($RAPID_{gNB}$), the UE may apply the following decision rule to determine whether the RAPID mismatch is due to CFO and if so, the direction of the CFO:

$$\text{Decision rule} = \begin{cases} \text{Not Doppler}, & RAPID_{gNB} \notin RAPID_{pos}URAPID_{neg} \\ \text{Ambiguity}, & RAPID_{gNB} \in RAPID_{pos} \cap RAPID_{neg} \\ \text{Positive Doppler}, & RAPID_{gNB} \in RAPID_{pos} \\ \text{Negative Doppler}, & RAPID_{gNB} \in RAPID_{neg} \end{cases} \quad (8)$$

where in Equation 8, "Not Doppler" represents a determination that the mismatched RAPID was not due to the Doppler effect (no frequency offset), "Positive Doppler" represents a determination that the mismatched RAPID was due to a positive frequency offset (e.g., PRACH 1 in FIG. 6), "Negative Doppler" represents a determination that the mismatched RAPID was due to a negative frequency offset (e.g., PRACH 2 in FIG. 6), and "Ambiguity" represents a determination that the mismatched RAPID may be due to either a positive or negative frequency offset.

In another example, the UE may determine whether a RAPID mismatch is caused by the uplink Doppler shift effect, as well as the direction of the Doppler shift (positive or negative), based on an expected RAPID at the base station and a timing advance received in a RAR from the base station. For instance, the UE may apply the following formulas to determine the existence and direction of the Doppler shift or CFO:

$$RAPID_0 \overset{\text{def}}{=} \left\lfloor \frac{RAPID_{UE}}{V} \right\rfloor V \qquad (9)$$

where $RAPID_0$ represents the RAPID for root $u$ with cyclic shift $C_v = 0$;

$$v_{UE} \overset{\text{def}}{=} RAPID_{UE} \bmod V; \qquad (10)$$

where $v_{UE}$ represents the cyclic shift index of $RAPID_{UE}$;

$$\tilde{d}_{pos} \overset{\text{def}}{=} (v_{UE} N_{CS} - d_u) \bmod L_{RA} \qquad (11)$$

where $\tilde{d}_{pos}$ represents the shift relative to $RAPID_0$ for CFO>0 (positive Doppler shift);

$$\tilde{d}_{neg} \overset{\text{def}}{=} (v_{UE} N_{CS} + d_u) \bmod L_{RA} \qquad (12)$$

where $\tilde{d}_{neg}$ represents the shift relative to $RAPID_0$ for CFO<0 (negative Doppler shift);

$$v_{gNB} \overset{\text{def}}{=} RAPID_{gNB} \bmod V \qquad (13)$$

where $v_{gNB}$ represents the cyclic shift index of $RAPID_{gNB}$;

$$T_{NW} = \left\lfloor \frac{TA_{MSG2}}{T_{\mathrm{RA}}} \right\rfloor TA_{MSG2} \qquad (14)$$

where $T_{NW}$ represents the timing advance reported by the network in seconds, and $T_{\mathrm{RA}}$ represents the RACH sampling period;

$$LB \overset{\text{def}}{=} (v_{gNB}\, N_{\mathrm{CS}} - T_{NW} - \epsilon)\bmod L_{RA}$$

$$UB \overset{\text{def}}{=} ((v_{gNB} + 1)\, N_{\mathrm{CS}} - T_{NW} - 1 + \epsilon)\bmod L_{RA} \qquad (15)$$

where Equation 15 defines a lower bound $LB$ and upper bound $UB$ associated with a cyclic shift for an expected RAPID, and $\varepsilon$ represents an error margin to cover error in $T_{NW}$;

$$I_D \overset{\text{def}}{=} \begin{cases} [LB, UB], & LB \le UB \\ [0, UB]\, \mathrm{U}\, [LB, L_{RA} - 1], & otherwise \end{cases} \qquad (16)$$

where $I_D$ represents the possible received cyclic shifts for an expected RAPID.

Upon determining the cyclic shifts for the expected RAPID ($I_D$), the UE may apply the following decision rule to determine whether the RAPID mismatch is due to CFO and if so, the direction of the CFO:

$$\text{Decision rule} = \begin{cases} \text{Not Doppler,} & \tilde{d}_{pos}, \tilde{d}_{neg} \notin I_D \\ \text{Ambiguity,} & \tilde{d}_{pos}, \tilde{d}_{neg} \in I_D \\ \text{Positive Doppler,} & \tilde{d}_{pos} \in I_D \\ \text{Negative Doppler} & \tilde{d}_{neg} \in I_D \end{cases} \qquad (17)$$

where in Equation 17, "Not Doppler" represents a determination that the mismatched RAPID was not due to the Doppler effect (no frequency offset), "Positive Doppler" represents a determination that the mismatched RAPID was due to a positive frequency offset (e.g., PRACH 1 in FIG. 6), "Negative Doppler" represents a determination that the mismatched RAPID was due to a negative frequency offset (e.g., PRACH 2 in FIG. 6), and "Ambiguity" represents a determination that the mismatched RAPID may be due to either a positive or negative frequency offset.

While the above two examples illustrate specific parameters and equations which the UE may apply in order to determine CFO and direction, the UE may apply other parameters or equations to make its determinations. Thus, the examples above are intended to be illustrative only in nature, and the determination of CFO and direction is not limited to the parameters and equations shown in these examples.

For instance, as described in the above examples, the UE may determine the presence and direction of the Doppler shift based on Doppler shift parameter $d_u$ (see, e.g., Equations 3, 4, 11, and 12). Typically, the maximum uplink CFO observed in HSTs may be twice the maximum Doppler shift (e.g., 2 x 1230 Hz=2460 Hz for 350 km/h HSTs, or approximately two PRACH subcarriers assuming $\Delta f_{\mathrm{RA}} = 1.25$ kHz). Thus, $d_u$ may be expressed as either $d^{(1)}_u$ or $d^{(2)}_u$, which may represent a cyclic shift position of a false alarm peak due to a frequency offset as large as one or two PRACH subcarriers, respectively. For instance, cyclic shift $d^{(1)}_u$ on sequence u may result from frequency offsets as large as one PRACH subcarrier, and cyclic shift $d^{(2)}_u$ on sequence u may result from frequency offsets as large as two PRACH subcarriers. Thus, in Equations 3, 4, 11, and 12 above, $d_u$ may be replaced with either $d^{(1)}_u$ (for at most one PRACH subcarrier offsets) or $d^{(2)}_u$ (for at most two PRACH subcarrier offsets), where $d^{(1)}_u$ is the smallest positive integer or largest negative integer that fulfills u* $d^{(1)}_u$ mod $L_{RA}$ = +/-1, and where $d^{(2)}_u$ is the smallest positive integer or largest negative integer that fulfills u* $d^{(2)}_u$ mod $L_{RA}$ = +/-2.

Referring back to FIG. 5, if the UE 502 determines that the threshold number 512 of RACH attempts (K out of N) have each failed due to the uplink Doppler shift, for example, in response to determining a positive Doppler, negative Doppler, or ambiguity in Equations 8 or 17 above, the UE may compensate for the Doppler shift in subsequent RACH attempts 516 by offsetting the carrier frequency 514 for each subsequent RACH message 518 (beginning with RACH attempt N+1). For example, the UE may apply an offset 520 to the carrier frequency 514 for subsequent RACH message 518 in RACH attempt N+1 by transmitting the preamble in the subsequent RACH message in the offset carrier frequency. For instance, if the UE transmitted RACH attempts 1 through N at a frequency of 3.8 GHz, the UE may apply an offset of 600 Hz or -600 Hz to RACH attempt N+1 by transmitting the preamble during that RACH attempt at the offset carrier frequency (e.g., 3.8000006 GHz or 3.7999994 GHz, respectively). The UE may apply a different offset (or same offset) in each subsequent RACH attempt (e.g., N+2, etc.), and the UE may continue to apply offsets to subsequent RACH messages accordingly until the UE receives a subsequent RAPID 522 that matches a transmitted preamble.

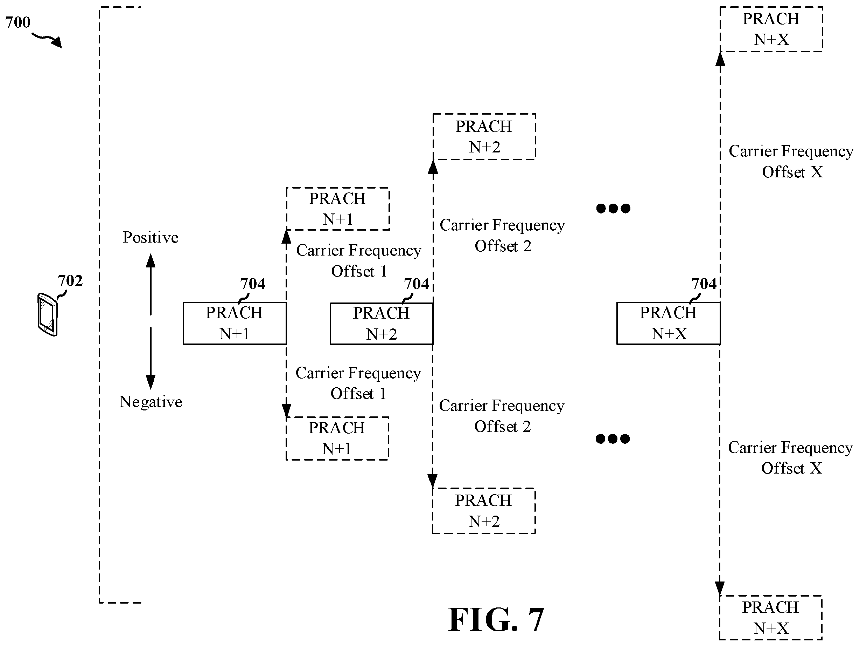

For instance, FIG. 7 illustrates an example 700 of a UE 702 that offsets the carrier frequency for different RACH preambles following a determination of K mismatched RAPIDs in N initial RACH attempts. UE 702 may correspond to HST UE 402 and UE 502, 602 of FIGs. 4-6. The UE may offset the carrier frequency for each RACH preamble, for example, by transmitting each preamble in PRACH 704 at different frequency offsets (positive or negative) to compensate for the Doppler shift effect. For instance, UE 702 may transmit the RACH preamble for RACH attempt N+1 in PRACH N+1 according to a first carrier frequency offset in either the positive or negative direction. For instance, if prior PRACHs (in RACH attempts N or prior attempts) underwent a positive Doppler shift, the UE may transmit PRACH N+1 at a lower frequency (negative frequency offset) in attempt to compensate for the positive Doppler shift, while if prior PRACHs underwent a negative Doppler shift, the UE may transmit PRACH N+1 at a higher frequency (positive frequency offset) in attempt to compensate for the negative Doppler shift. If the value of the first carrier frequency offset is insufficient to compensate for the Doppler shift, the base station may still misidentify PRACH N+1 as including a different preamble and configure an incorrect RAPID accordingly. Therefore, the UE may attempt to apply more compensation (a different offset) in the next RACH attempt. For instance, UE 702 may transmit the RACH preamble for RACH attempt N+2 according to a second carrier frequency offset in either the positive or negative direction, where the second carrier frequency offset is different than the first carrier frequency offset. For instance, the UE may transmit PRACH N+2 at a lower frequency than PRACH N+1 to increase compensation for a positive Doppler shift, or at a higher frequency than PRACH N+1 to increase compensation for a negative Doppler shift. Alternatively, the second carrier frequency offset may be the same as the first carrier frequency offset. The UE may continue to offset the PRACHs for subsequent RACH attempts until the Doppler shift is sufficiently compensated and the base station 704 correctly identifies the preamble in the PRACH. As a result, the base station may configure a correct RAPID and the likelihood of RACH success may thereby be increased.

Referring again to FIG. 5, in one example, the value of each offset 520 may be bounded within a range that the base station may configure based on the preamble subcarrier spacing $\Delta f_{RA}$. For example, the base station may configure the following ranges for CFO compensation:

$$[-(1.5+L)*RA\_SCS, -(0.5+L)*RA\_SCS] \qquad (18)$$

or;

$$[(0.5+L)*RA\_SCS, (1.5+L)*RA\_SCS] \qquad (19)$$

where the first range (18) represents an example of a negative range that the UE may apply in response to determining a negative (or ambiguous) frequency offset in Equations 8 or 17, the second range (19) represents an example of a positive range that the UE may apply in response to determining a positive (or ambiguous) frequency offset in Equations 8 or 17, and RA_SCS refers to the preamble subcarrier spacing $\Delta f_{RA}$. Moreover, the value of L may depend on whether the frequency offset causing the RAPID mismatch is as large as one PRACH subcarrier (in which case the UE may apply $d^{(1)}{}_u$ in Equations 3, 4, 11, or 12 above), or as large as two PRACH subcarriers (in which case the UE may apply $d^{(2)}{}_u$ in Equations 3, 4, 11, or 12 above). For instance, L = 0 if the frequency offset is one PRACH subcarrier, and L = 1 if the frequency offset is two PRACH subcarriers.

Additionally, in another example, the aforementioned ranges (e.g., negative range (18) or positive range (19)) may be further optimized by a maximum uplink carrier frequency offset. In the example ranges (18) and (19) above, the lowest bound and highest bound may be -2.5*RA_SCS and 2.5 RA_SCS, respectively, for L = 1 (*i.e.* -(1.5+[L=1])*RA_SCS and (1.5+[L=1])*RA_SCS). However, these ranges may be optimized (narrowed) to consider the maximum uplink CFO observable in HST deployments. For instance, as described above, the maximum uplink CFO observed in HSTs may be twice the maximum Doppler shift (e.g., 2 x 1230 Hz=2460 Hz for 350 km/h HSTs, or approximately two PRACH subcarriers assuming $\Delta f_{RA}$ = 1.25 kHz). Since 2460 Hz < 2.5 kHz = 2 * ($\Delta f_{RA}$ = 1.25 kHz), the UE may apply positive CFO compensation up to 2 * RA_SCS for L = 1 (two PRACH subcarriers), rather than 2.5 * RA_SCS as in the previous example range (19). Similarly, the UE may apply negative CFO compensation down to -2 * RA_SCS for L = 1, rather than -2.5 * RA_SCS as in the previous example range (18)). Thus, the aforementioned ranges (18) and (19) may be modified to replace (1.5+L) *RA_SCS with 2 * RA_SCS, narrowing the ranges and allowing for more optimal offset determination.

The UE may determine the value of each offset 520 to be applied for each subsequent RACH attempt 516 (within the bounds of the aforementioned ranges), based on one or more configured or pre-configured tables or other data structures. For example, the base station may configure the UE to apply the offsets identified in Table 2 below for positive frequency offsets or in Table 3 below for negative frequency offsets:

Table 2 RAPID Mismatch Due to Positive CFO

| RACH Attempt | Offset (CFO Compensation) |
|---|---|
| N + 1 | -O*M |
| N+2 | -(O + 1) * M |
| N+3 | -(O + 2) * M |
|  |  |
| N+X-2 | -(O + X - 3) * M |
| N + X - 1 | -(O + X - 2) * M |
| N+X | -(O+X-1)*M |

Table 3 RAPID Mismatch Due to Negative CFO

| RACH Attempt | Offset (CFO Compensation) |
|---|---|
| N + 1 | O*M |
| N+2 | (O + 1) * M |
| N+3 | (O + 2) * M |
|  |  |
| N+X-2 | (O + X - 3) * M |
| N + X - 1 | (O + X - 2) * M |
| N+X | (O+X-1)*M |

where M represents a configurable, CFO compensation step per RACH attempt (e.g., M = 200 Hz or some other configured or pre-configured value), O represents a configurable starting frequency for the CFO compensation (e.g.,

$$O = \lfloor (0.5 + L)*RA\_SCS/M \rfloor$$ or some other function], and X represents a maximum number of RACH attempts for which CFO compensation may be applied. The value of X may depend on the values of O and M. For example, X may equal $\lceil (1.5 + L)*RA\_SCS/M - O \rceil$ or some other value.

While Tables 2 and 3 above respectively refer to example configurations where the UE applies a different positive offset for each subsequent RACH attempt or a different, negative offset for each subsequent RACH attempt, the configurations are not so limited. For instance, different values or functions for M, O, and X, or different parameters than M, O, or X, may be applied to a RACH attempt in either Table. In another example, Tables 2 and Tables 3 may be combined into a single table indicating alternating positive and negative offsets across RACH attempts (or some other combination of positive and negative offsets), and the UE may apply a positive or negative offset for different ones of the subsequent RACH attempts accordingly. In a further example, multiple RACH attempts may be associated with the same offset rather than a different offset as in Tables 2 and 3. For instance, RACH attempt N+1 and N+2 may both be associated with offset O * M, rather than offsets O * M and (O + 1) * M respectively. The UE may apply the same offset to multiple RACH attempts, for instance, when M is a large value (e.g., M = 600 Hz).

Still referring to FIG. 5 in another example, the UE may apply CFO compensation if a consecutive number (Y) of RAPID mismatches are due to a frequency offset in the same direction (e.g., all positive Doppler shifts or all negative Doppler shifts). If the UE determines the consecutive number Y of RAPID mismatches are all due to a positive CFO, the UE may apply negative frequency offsets to each subsequent RACH attempt 516, such as illustrated in Table 2 above. Alternatively, if the UE determines the consecutive number Y of RAPID mismatches are all due to a negative CFO, the UE may apply positive frequency offsets to each subsequent RACH attempt 516, such as illustrated in Table 3 above. The value of Y may be configurable by the base station or pre-configured for the UE (e.g., Y = 3 or some other value). The consecutive RAPID mismatches may include the last ($K^{th}$) RAPID mismatch which the UE identifies in RAPID attempts 1 through N.

For example, assume K = 5 and Y = 3, where the UE determines RAPID mismatches due to CFO in RACH attempts 1-5 with the following directions: RACH attempt 1 and 2 - negative (K2 = 2), and RACH attempt 3, 4 and 5 - positive (K1 = 3). In such case, three consecutive RACH attempts (including the last or $K^{th}$ RACH attempt) are associated with the positive Doppler shift direction, and so the UE may determine there is a high likelihood that subsequent RACH attempts 516 will also include the same Doppler shift direction (positive). As a result, the UE may apply negative frequency offsets to subsequent RACH attempts 516 according to Table 2 above.

On the other hand, if a consecutive number Y of RAPID mismatches due to a frequency offset in the same direction cannot be determined, the UE may determine which frequency offset direction is associated with more RAPID mismatches (e.g., whether K1 > K2 or K2 > K1). Following this determination, the UE may apply offsets to the subsequent RACH attempts 516 accordingly to compensate for this direction. For example, if K1 > K2, the UE may apply negative frequency offsets to each subsequent RACH attempt 516 such as illustrated in Table 2 above, while if K2 > K1, the UE may apply positive frequency offsets to each subsequent RACH attempt 516 such as illustrated in Table 3 above.

For example, assume K = 5 and Y = 3, where the UE determines RAPID mismatches due to CFO in RACH attempts 1-5 with the following directions: RACH attempt 1, 2, and 5 - positive (K1 = 3), and RACH attempt 3 and 4 - negative (K2 = 2). In such case, the UE may determine that a consecutive number Y of RAPID mismatches associated with the same Doppler shift direction does not exist (since only two consecutive RACH attempts in the same direction exist in this example). Therefore, the UE may determine that since K1 > K2 (there are more positive Doppler shifts), there is a high likelihood that subsequent RACH attempts 516 will also include the positive Doppler shift direction. As a result, the UE may apply negative frequency offsets to subsequent RACH attempts 516 according to Table 2 above.

As a result, if the UE cannot determine a consecutive number Y of RAPID mismatches due to a same direction frequency offset, the UE may determine which frequency offset direction is associated with more RAPID mismatches (i.e., the majority direction) and which frequency offset direction is associated with less RAPID mismatches (i.e., the minority direction), after which the UE may apply CFO compensation accordingly. For instance, if K1 > K2, the UE may determine that the majority direction is positive and the minority direction is negative, while if K2 > K1, the UE may determine that the majority direction is negative and the minority direction is positive. However, in some cases the UE may also determine that the majority direction does not apply to the last RAPID mismatch (e.g., the $K^{th}$ RACH attempt). For instance, if K1 > K2, the UE may in some cases determine that K1 does not include the last RAPID mismatch, or if K2 > K1, the UE may in some cases determine that K2 does not include the last RAPID mismatch. As a result, the UE may not be able to determine with high likelihood whether subsequent RACH attempts 516 will also be associated with the majority direction (whether K1 or K2).

For example, assume N = 10 and K = 5, RACH attempts 2 and 5 are positive (K1 = 2), and RACH attempts 1, 3, and 4 are negative (K2 = 3). Here, since K2 > K1, the UE would initially apply positive frequency offsets to subsequent RACH attempts 516 according to Table 3 above. However, in this example, although the majority direction is negative (K2 > K1), the last $K^{th}$ RAPID mismatch in RACH attempt 5 is in the minority direction (positive or K1). Thus, the UE may not be able to determine with high likelihood that subsequent RACH attempts 516 will also include the negative direction (e.g., they could be positive instead).

Accordingly, while the UE is applying CFO compensation to the subsequent RACH attempts 516 in the majority direction, the UE may also monitor these subsequent RACH attempts to determine whether the offset direction should switch (e.g., from the offsets in Table 2 to Table 3, or vice-versa). For example, the UE may determine whether a consecutive number Y of RAPID mismatches occurred due to a CFO in the minority direction (K2 if K1 > K2, or K1 if K2 > K1), including the RAPID mismatch associated with the last monitored subsequent RACH attempt. If the UE determines that a consecutive number Y of RAPID mismatches in the minority direction exist in the subsequent RACH attempts, the UE may determine that applying offsets in the majority direction was inaccurate, and therefore the UE may switch to offsets in the minority direction accordingly. For example, if K1 > K2, the UE may switch from applying the offsets in Table 2 to the offsets in Table 3, while if K2 > K1, the UE may switch from applying the offsets in Table 3 to the offsets in Table 2. The UE may also stop monitoring the subsequent RACH attempts at this point.

For example, assume that the UE begins to apply CFO compensation according to Table 3 beginning with subsequent RACH attempt 6. Moreover, assume Y = 3, where after performing RACH attempts 1-5 in the example above, the UE determines RAPID mismatches notwithstanding CFO compensation in subsequent RACH attempts 6-10 with the following directions: subsequent RACH attempts 6 and 7 - negative, and subsequent RACH attempts 8 through 10 - positive. In such case, three consecutive RACH attempts (including the last subsequent RACH attempt 10) are associated with the positive Doppler shift direction, and so the UE may determine there is a high likelihood that additional RACH attempts (e.g., RACH attempts 11 and onward) will also include the same Doppler shift direction (positive). As a result, during additional RACH attempts (e.g., 11 and onward), the UE may switch from applying positive frequency offsets according to Table 3 to instead applying negative frequency offsets according to Table 2.

Thus, in any of the foregoing examples, the UE may perform multiple, subsequent RACH attempts with applied carrier frequency offsets in attempt to compensate for uplink Doppler shift effects on message 1 or msgA. However, in some cases where the UE's wireless condition is poor, the UE may not be capable of performing the subsequent RACH attempts. For example, if the reference signal received power (RSRP) of a non-HST cell serving the HST UE is below a configured RSRP threshold (e.g., -120 dbM by default, or some other value), the UE may not perform more than the N RACH attempts. Therefore, in one example, the UE may perform the CFO compensation / offsetting, calculations or determinations described in any of the examples above in response to determining that the RSRP of the serving cell is larger than or equal to the RSRP threshold.

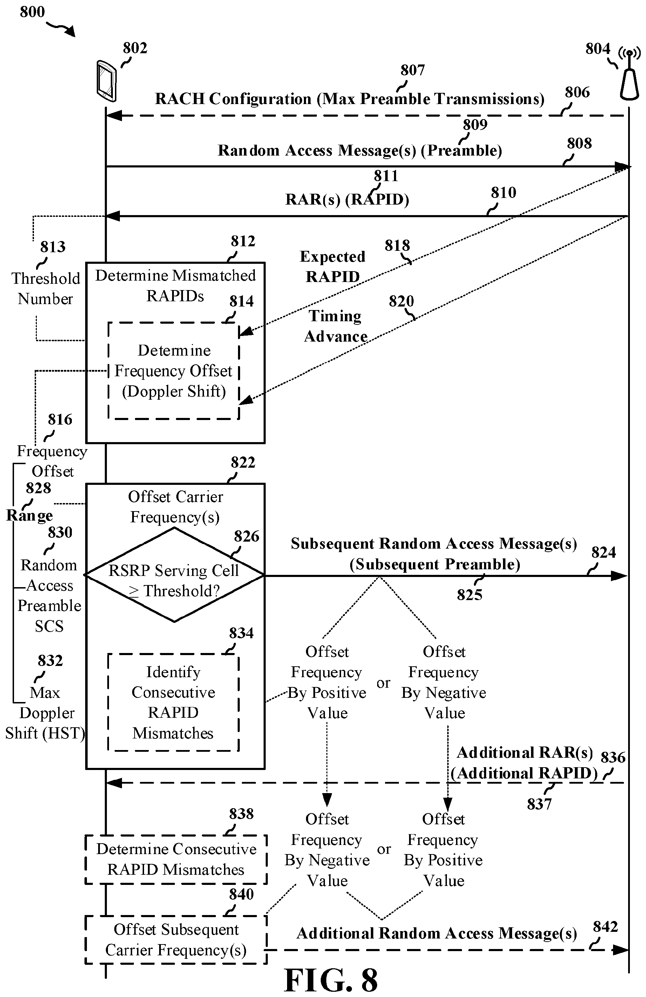

FIG. 8 illustrates an example 800 of a call flow between a UE 802 and a base station 804. UE 802 may correspond to HST UE 402 or UE 502, 602, 702 of FIGs. 4-7, and base station 804 may correspond to base station 404, 504, 604 of FIGs. 4-6. Initially, the UE may receive a RACH configuration 806 from the base station. The RACH configuration may include a maximum number of preamble transmissions 807 (e.g., the parameter *maxPreambleTrans* or another name). After receiving the RACH configuration, the UE may transmit one or more random access message(s) 808. The random access message(s) 808 may correspond to RACH messages 408, 508 in FIGs. 4 and 5 (e.g., in RACH attempts 1 through N) and may each include a preamble 809 selected by the UE. In response to transmitting the random access message(s) 808, the UE may receive one or more RAR(s) 810 from the base station, where each RAR is responsive to a random access message. The RAR(s) 810 may correspond to RARs 412, 510 (e.g., in RACH attempts 1 through N) and may each include a RAPID 811 configured by the base station. The number of RAR(s) (e.g., the number N) may be a function of the maximum number of preamble transmissions 807.

At 812, the UE 802 may determine whether a threshold number 813 of the RAR(s) 810 include mismatched RAPIDs. For instance, the UE may determine whether K out of the N RARs includes a different RAPID than the corresponding preamble. Moreover, the UE may determine whether each mismatched RAPID in the K RARs is due to an uplink Doppler shift effect. For example, at 814, the UE may determine whether a frequency offset 816 (or Doppler shift) affected each of the RAR(s), as well as determine the direction of the frequency offset. In one example, the UE may perform the determination at 814 based on an expected RAPID 818, such as described above with respect to Equations 1-8. In another example, the UE may perform the determination at 814 based on the expected RAPID 818 and a timing advance 820, such as described above with respect to Equations 9-17.

If the UE 802 determines at 812 that the threshold number of RAR(s) 810 include mismatched RAPIDs based on frequency offset 816, then at 822, the UE may offset the carrier frequency(s) for subsequent random access message(s) 824 (e.g., in RACH attempts N+1 and onward). The UE may offset the carrier frequency(s), for example, by transmitting a preamble 825 in each subsequent random access message 824 at a frequency which is offset with respect to the carrier frequency for random access message(s) 808. The UE may apply the carrier frequency offsets at 822 in response to determining, at 826, that the RSRP of the serving cell of the base station 804 serving the UE is greater than or equal to an RSRP threshold.

The carrier frequency offset which the UE may apply to the subsequent random access messages may be within a range 828 of configured positive or negative offsets. For instance, the UE 802 may offset the carrier frequency for each subsequent random access message by a positive value such as described above in Table 3, or by a negative value such as illustrated above in Table 2. In one example, the range 828 may be a function of a random access preamble subcarrier spacing 830. In another example, the range 828 may be a function of the frequency offset 816 determined at 814. In a further example, the range 828 may be a function of a maximum Doppler shift 832 in HSTs.

The UE 802 may determine the direction in which to apply the frequency offsets at 822 (e.g., positive or negative) in response to identifying, at 834, a consecutive number of RAPID mismatches in the threshold number of RAR(s) 810. For instance, the UE may identify whether Y consecutive RAR(s) include RAPID mismatches due to CFO. If Y consecutive mismatches are identified, then the UE may offset the carrier frequency of each subsequent random access message 824 based on the direction of the frequency offset associated with each consecutive mismatch. For instance, if the mismatches are based on positive CFO, the UE may apply negative frequency offsets at 822, while if the mismatches are based on negative CFO, the UE may apply positive frequency offsets at 822.

Otherwise, if the UE 802 receives additional RAR(s) 836 in response to the subsequent random access message(s) 824, where each additional RAR includes a RAPID 837 that is mismatched with a corresponding one of the subsequent preambles 825 (e.g., due to an incorrect frequency offset direction applied at 822), then the UE may determine at 838 whether Y consecutive mismatches are identified in the RAPID of these additional RAR(s) 836. If the UE determines that Y consecutive mismatches are identified in these additional mismatched RAPIDs, then at 840, the UE may offset the carrier frequency(s) for additional random access message(s) 842 which the UE transmits to the base station in the opposite direction than that applied at 822. For instance, if the UE applied positive frequency offsets to the subsequent random access messages 824 at 822 (e.g., according to Table 3), then at 840 the UE may apply negative frequency offsets to the additional random access messages 842 (e.g., according to Table 2). Similarly, if the UE applied negative frequency offsets to the subsequent random access messages 824 at 822 (e.g., according to Table 2), then at 840 the UE may apply positive frequency offsets to the additional random access messages 842 (e.g., according to Table 3). In this way, the likelihood of successful RACH attempts may further be increased.

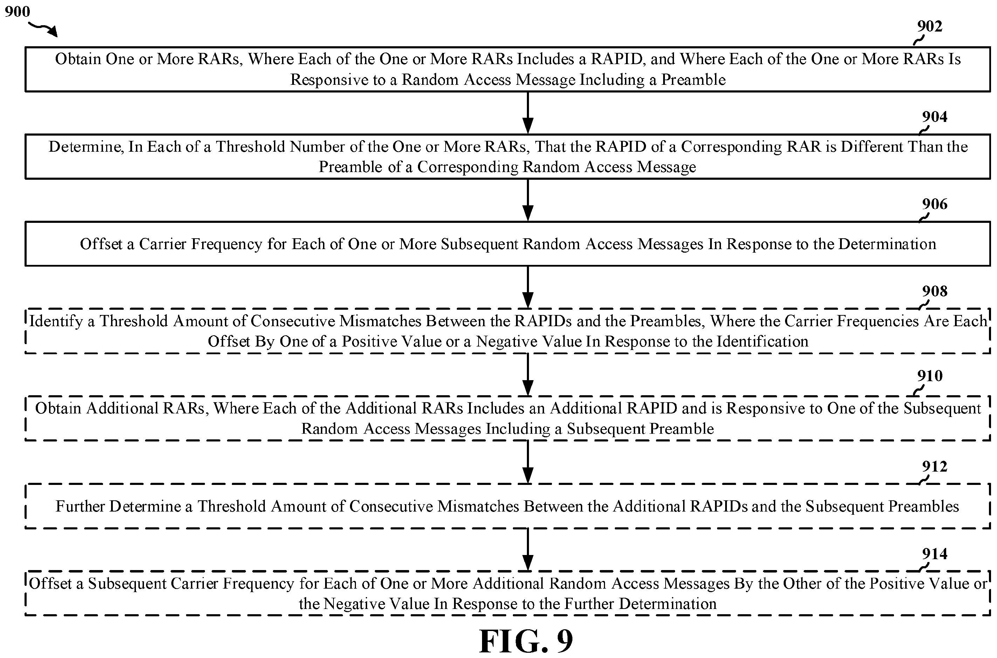

FIG. 9 is a flowchart 900 of a method of wireless communication. The method may be performed by a UE (e.g., the UE 104, 350, 402, 502, 602, 702, 802; the apparatus 1002). Optional aspects are illustrated in dashed lines. The method allows a UE to apply CFO compensation to improve RACH success rate in response to determining mismatched RAPIDs in prior RACH attempts caused by an uplink Doppler shift effect (e.g., in a HST).

At 902, the UE obtains one or more RARs, where each of the one or more RARs includes a RAPID, and where each of the one or more RARs is responsive to a random access message including a preamble. For example, referring to FIG. 8, the UE 802 may obtain RAR(s) 810 each including a RAPID 811. The RARs may be obtained in response to random access messages 808 which the UE transmits to the base station 804 including preambles 809. The UE (or a component of the UE) may obtain the RARs, for example, by receiving the RARs from base station 310, 404, 504, 604, 804 and demodulating the data of the received RARs. For instance, RX processor 356 of UE 350 may receive the RARs from the base station through one or more antennas 352, and controller/processor 359 of UE 350 may demodulate the data of the received RARs and identify the RAPIDs.

In one example, a number of the one or more RARs may be based on a maximum number of preamble transmissions. For example, referring to FIG. 8, the UE 802 may obtain a number N of RAR(s) 810, where the number N is a function of the maximum number of preamble transmissions 807 configured for the UE. For instance, N may be the minimum value between the maximum number of preamble transmissions 807 and a pre-configured or configured value (e.g., 10), such as represented by the equation N = minimum *(preambleTransMax,* 10).

At 904, the UE determines, in each of a threshold number of the one or more RARs, that the RAPID of a corresponding RAR is different than the preamble of a corresponding random access message. For instance, referring to FIG. 8, the UE 802 may determine, at 812, that each RAR 810 out of the threshold number 813 of RAR(s) 810 includes a RAPID that is different than the preamble of a corresponding one of the random access message(s) 808. For instance, referring to FIG. 5, the UE 502 may determine that K RACH attempts within the N consecutive RACH attempts each include a mismatched RAPID. The UE (or a component of the UE) may perform this determination, for example, by identifying a RAPID in one of N RARs (e.g., message 2 or msgB), comparing the RAPID with a corresponding preamble in one of N random access messages (e.g., message 1 or msgA), identifying a mismatch between the RAPID and the preamble, and repeating the identification and comparison for different RAPIDs until K mismatches have been identified. For example, following receipt of RAR 510 in RACH attempt 1 from RX processor 356, the controller/processor 359 of UE 350 may identify a RAPID in that RAR, compare that RAPID with the preamble in the previously transmitted RACH message 508 during RACH attempt 1, and identify that the RAPID and the preamble are different (e.g., the RAPID configured in the RAR 510 may indicate preamble 21 or some other value while the selected preamble included in RACH message 508 was actually preamble 9 or some other different value). The controller/processor 359 may similarly repeat the above process of identifying RAPID mismatches in RACH attempt 2, 3, etc. until K RAPID mismatches have been identified.

In one example, each of the threshold number of the one or more RARs may include a mismatched RAPID based on a frequency offset of a PRACH received at a base station. For example, referring to FIG. 8, at 814, the UE 802 may determine that a frequency offset 816 (e.g., a positive or negative Doppler shift) affected each of the RAR(s) 810 in which the UE determined mismatched RAPIDs at 812. For instance, referring to FIG. 6, the UE 602 may determine that the PRACH 606 carrying each RACH preamble (e.g., in the random access message(s) 808 of FIG. 8) were received by the base station 604 following an uplink Doppler shift in either the positive direction (at a higher frequency than transmitted, such as PRACH 1 in FIG. 6) or the negative direction (at a lower frequency than transmitted, such as PRACH 2 in FIG. 6). As a result of this frequency offset or uplink Doppler shift in the PRACHs 606, the UE may determine that the base station misidentified each PRACH as including a different preamble than that actually transmitted by the UE.

In one example, the frequency offset may be determined based on an expected RAPID received at the base station. For instance, referring to FIG. 8, at 814, the UE 802 may determine the existence of the frequency offset 816 which caused the mismatched RAPIDs, as well as determine the direction of the frequency offset 816 (positive or negative), based on the expected RAPID 818 which the UE expected the base station 804 to have received as a result of the uplink Doppler shift. For example, the UE may apply the aforementioned Equations 1 - 7 to identify the expected RAPID (e.g., $RAPID_{pos}$ or $RAPID_{neg}$ in one example), and in response to this expected RAPID, apply the aforementioned Equation 8 to determine the existence and direction of the frequency offset 816.

In one example, the frequency offset may be further determined based on a timing advance. For instance, referring to FIG. 8, at 814, the UE 802 may determine the existence of the frequency offset 816 which caused the mismatched RAPIDs, as well as determine the direction of the frequency offset 816, based on the timing advance 820 reported by the base station 804 as well as the expected RAPID 818. For example, the UE may apply the aforementioned Equations 9 - 16 to identify the timing advance (e.g., $T_{NW}$ in one example), expected RAPID (e.g., $\tilde{d}_{pos}$ or $\tilde{d}_{neg}$ in one example), and the cyclic shifts for the expected RAPID (e.g., $I_D$) in one example, and in response to these parameters, apply the aforementioned Equation 17 to determine the existence and direction of the frequency offset 816.

At 906, the UE offsets a carrier frequency for each of one or more subsequent random access messages in response to the determination. For example, referring to FIG. 8, in response to determining at 812 the threshold number 813 of mismatched RAPIDs due to frequency offsets 816, at 822, the UE may offset the carrier frequency(s) for subsequent random access message(s) 824 to compensate for the frequency offsets 816. For instance, referring to FIG. 7, the UE 702 may offset the carrier frequency for each RACH preamble, for example, by transmitting each preamble in PRACH 704 at different frequency offsets (positive or negative) to compensate for the Doppler shift effect. Referring to FIG. 5, the UE 502 may apply offset 520 to the carrier frequency 514 for each subsequent RACH message 518. As an example, if the UE transmitted random access message(s) 808 at a carrier frequency of 3.8 GHz, the UE may apply an offset of 600 Hz or -600 Hz (or some other positive or negative value) to the 3.8 GHz frequency when transmitting subsequent random access message(s) 824 (e.g., such that the message is transmitted at an offset carrier frequency of 3.8000006 GHz or 3.7999994 GHz, respectively, in one example). The offset may be, for example, one of the CFO compensation values identified in Tables 2 or 3 above. The UE (or a component of the UE) may perform the offsetting, for example, by identifying the offset to be applied to a carrier frequency for each subsequent random access message, and transmitting each subsequent random access message at the offset carrier frequency. For example, in response to determining the threshold number of mismatched RAPIDs due to frequency offsets, the controller/processor 359 of UE 350 may identify the offset for each subsequent random access message from either Table 2 or 3 (e.g., depending on the direction of the frequency offsets), and the TX processor 368 may transmit to the base station 310 through one or more antennas 352 the subsequent random access messages at the offset carrier frequencies identified by the controller/processor 359 for each subsequent random access message.

In one example, each of the carrier frequencies may be offset by a value within a range based on a random access preamble subcarrier spacing. For example, referring to FIG. 8, the offsets may be within range 828 of configured positive or negative values. The range 828 may be a function of the random access preamble subcarrier spacing 830. For instance, referring to FIG. 5, each offset 520 (e.g., corresponding to one of the values in Tables 2 or 3 above) may be bounded within a configured range which is based on the preamble subcarrier spacing $\Delta f_{RA}$. For example, the range may be one of the aforementioned ranges (18) or (19), which are a function of RA_SCS ($\Delta f_{RA}$).

In one example, the range may be a function of a frequency offset of a PRACH received at a base station. For example, referring to FIGs. 6 and 8, the range 828 may be based on the frequency offset 816 that affected the PRACHs 606 carrying the RACH preambles received by the base station 604, 804, which frequency offset the UE 802 has determined at 814. For instance, referring to FIG. 5, either of the aforementioned ranges (18) or (19) may be a function of L, which value may depend on whether the frequency offset 816 is as large as one PRACH subcarrier (e.g., L = 0), or as large as two PRACH subcarriers (e.g., L = 1).

In one example, the range may be further based on a maximum Doppler shift in HST deployments. For example, referring to FIG. 8, the range 828 may be based on the maximum Doppler shift 832 in HSTs (e.g., the range 828 may be a function of a maximum value for the frequency offset 816 in FIG. 8). For instance, referring to FIG. 5, either of the aforementioned ranges (18) or (19) may be a function of L or RA_SCS, either of which value may be further optimized to depend on a maximum uplink Doppler shift observed in HSTs. For example, the maximum uplink Doppler shift may be twice the maximum Doppler shift typically observed in HSTs (e.g., 2 x 1230 Hz=2460 Hz for 350 km/h HSTs, or approximately two PRACH subcarriers assuming $\Delta f_{Ra}$ = 1.25 kHz). An example of a HST deployment is shown in FIG. 4.

In one example, each of the carrier frequencies may be offset in response to a RSRP associated with a serving cell exceeding a threshold. For instance, referring to FIG. 8, the UE 802 may offset carrier frequencies at 822 in response to determining, at 826, that the RSRP of the serving cell of the base station 804 serving the UE is greater than or equal to an RSRP threshold. For instance, referring to FIGs. 4 and 5, the UE 402, 502 may apply offsets 520 to the carrier frequency 514 for each subsequent RACH message 518 if the RSRP of a non-HST cell serving the HST UE (e.g., a cell in which base station 404 serves HST UE 402) is greater than or equal to a configured RSRP threshold (e.g., -120 dbM or some other value).

In one example, each of the carrier frequencies may be offset by a different value. For instance, referring to FIGs. 5, 7 and 8, the UE 502, 702, 802 may apply offsets 520 to the carrier frequencies 514 for the subsequent RACH messages 518 (e.g., at 822) according to either (or both) configurations in aforementioned Tables 2 or 3, where each offset is different for each subsequent RACH message such as illustrated in FIG. 7. For instance, the subsequent RACH message in RACH attempt N+1 may be offset by one value -O * M (or its positive version in the other Table), the next subsequent RACH message in RACH attempt N+2 may be offset by a different value -(O + 1) * M (or its positive version), and so forth, where M represents a configurable offset per RACH attempt such as M = 200 Hz or some other value, and O represents a configurable starting frequency for the offsets such as O $O = \lfloor (0.5 + L)*RA\_SCS/M \rfloor$ or some other function. Moreover, at least one of the different values may be a function of a maximum number (X) of the one or more subsequent random access messages. For instance, the subsequent RACH message in RACH attempt N + X - 2 may be offset by another different value -(O + X - 3) * M (or its positive version), the next subsequent RACH message in RACH attempt N + X - 1 may be offset by a further different value -(O + X - 2) * M (or its positive version), and so forth, where X represents a maximum number of RACH attempts for which CFO compensation may be applied. The value of X may depend on the values of O and M. For example, X may equal $\lceil (1.5 + L)*RA\_SCS/M - O \rceil$ or some other value.

In one example, one or more of the carrier frequencies may be offset by a same value. For instance, referring to FIGs. 5 and 8, the UE 502, 802 may apply offsets 520 to the carrier frequencies 514 for the subsequent RACH messages 518 (e.g., at 822) according to either (or both) configurations in aforementioned Tables 2 or 3, where one or more of the offsets is the same for subsequent RACH messages. For example, RACH attempt N+1 and N+2 may both be associated with the same offset O * M (or its negative version in the other Table), rather than different offsets O * M and (O + 1) * M respectively (or their negative versions in the other Table). The UE may apply the same offset to multiple RACH attempts, for instance, when M is a large value (e.g., M = 600 Hz). Similarly, the same value may be a function of the maximum number (X) of the one or more subsequent random access messages. For instance, RACH attempts N + X - 2 and N + X - 1 may both be associated with the same offset -(O + X - 3) * M, rather than different offsets -(O + X - 3) * M and -(O + X - 2) * M respectively.

At 908, the UE may identify a threshold amount of consecutive mismatches between the RAPIDs and the preambles, where the carrier frequencies are each offset by one of a positive value or a negative value in response to the identification. For instance, referring to FIG. 8, at 834, the UE may identify a threshold amount Y of consecutive RAPID mismatches between RAPIDs 811 and preambles 809. If Y consecutive mismatches are identified at 834, then at 822, the UE may offset the carrier frequency of each subsequent random access message 824 by a positive or negative value depending on the frequency offsets 816 determined at 814. For instance, referring to FIG. 5, if the UE 502 determines that Y consecutive RAPID mismatches within RACH attempts 1 through K are all due to a positive frequency offset (e.g., the frequency offset 816 in FIG. 8 is positive, such as with respect to PRACH 1 in FIG. 6), the UE may apply the negative frequency offsets in Table 2 to each subsequent RACH attempt 516. Alternatively, if the UE determines that Y consecutive RAPID mismatches within RACH attempts 1 through K are all due to a negative frequency offset (e.g., the frequency offset 816 in FIG. 8 is negative, such as with respect to PRACH 2 in FIG. 6), the UE may apply the positive frequency offsets in Table 3 to each subsequent RACH attempt 516. The value of Y may be configurable by the base station or pre-configured for the UE (e.g., Y = 3 or some other value). The UE (or a component of the UE) may perform the identification of the threshold amount of consecutive mismatches between the RAPIDs and the preambles, for example, by counting each instance where a RAPID 811 is different from a preamble 809 within RACH attempts 1 through K, determining that the counting totals at least the threshold amount (Y) in consecutive RACH attempts, and determining that the threshold amount of counted instances are all subject to a same direction frequency offset. For instance, the controller/processor 359 of UE 350 may identify that three consecutive RACH attempts 3, 4, and 5 include mismatched RAPIDs due to a positive frequency offset (assuming K = 5 and Y = 3).

At 910, the UE may obtain additional RARs, where each of the additional RARs include an additional RAPID and is responsive to one of the subsequent random access messages including a subsequent preamble. For instance, referring to FIG. 8, the UE 802 may obtain additional RAR(s) 836 from the base station 804 in response to the subsequent random access message(s) 824 which the UE transmitted with the subsequent preambles 825. Each of the additional RARs may include an additional RAPID 837 configured by the base station. The UE (or a component of the UE) may obtain the additional RARs, for example, by receiving the additional RARs and demodulating the data in the additional RARs. For instance, RX processor 356 may receive the additional RARs through one or more antennas 352, and controller/processor 359 may demodulate the data received from the RX processor 356.

At 912, the UE may further determine a threshold amount of consecutive mismatches between the additional RAPIDs and the subsequent preambles. For instance, referring to FIG. 8, at 838, the UE may determine a threshold amount Y of consecutive RAPID mismatches between additional RAPIDs 837 and subsequent preambles 825. The threshold amount Y may the same as, or different from, the threshold amount Y referenced above at 908 (and at 834 in FIG. 8). The UE (or a component of the UE) may perform the further determination, for example, according to the following process. First, if the controller/processor 359 of UE 350 cannot determine at 834 that Y consecutive RAPID mismatches are all due to a same direction frequency offset, the controller/processor 359 may determine the majority direction of the frequency offsets and the minority direction of the frequency offsets. Next, the controller/processor 359 may receive the additional RAR(s) 836 including the additional RAPIDs 837, and the controller/processor 359 may compare Y consecutive additional RAPIDs with the subsequent preambles 825 of the corresponding subsequent random access messages 824. The controller/processor 359 may then determine whether these additional RAPID mismatches are due to a frequency offset in the minority direction.

Finally, at 914, the UE may offset a carrier frequency for each of one or more additional random access messages by one of a positive value or a negative value in response to the further determination, where the carrier frequencies for the one or more subsequent random access messages are offset by the other of the positive value or the negative value. For instance, referring to FIG. 8, if the UE determines at 838 that Y consecutive mismatches are identified in the additional RAPIDs 837 of the additional RARs 836, then at 840, the UE may offset the carrier frequency(s) for additional random access message(s) 842 which the UE may transmit to the base station 804. The UE may offset these carrier frequency(s) in the opposite direction than that applied at 822. For instance, if the UE applied positive frequency offsets to the subsequent random access messages 824 at 822 (e.g., according to Table 3), then at 840 the UE may apply negative frequency offsets to the additional random access messages 842 (e.g., according to Table 2). Similarly, if the UE applied negative frequency offsets to the subsequent random access messages 824 at 822 (e.g., according to Table 2), then at 840 the UE may apply positive frequency offsets to the additional random access messages 842 (e.g., according to Table 3). The UE (or a component of the UE) may perform the offsetting of the carrier frequency for each additional random access message, for example, by identifying the offset to be applied to the carrier frequency for each additional random access message, and transmitting each additional random access message at the offset carrier frequency. For example, in response to further determining the threshold number of mismatched additional RAPIDs due to minority direction frequency offsets, the controller/processor 359 of UE 350 may identify the offset for each additional random access message from either Table 2 or 3 (e.g., in the opposite direction applied to the subsequent random access messages), and the TX processor 368 may transmit to the base station 310 through one or more antennas 352 the additional random access messages at the offset carrier frequencies identified by the controller/processor 359 for each additional random access message.

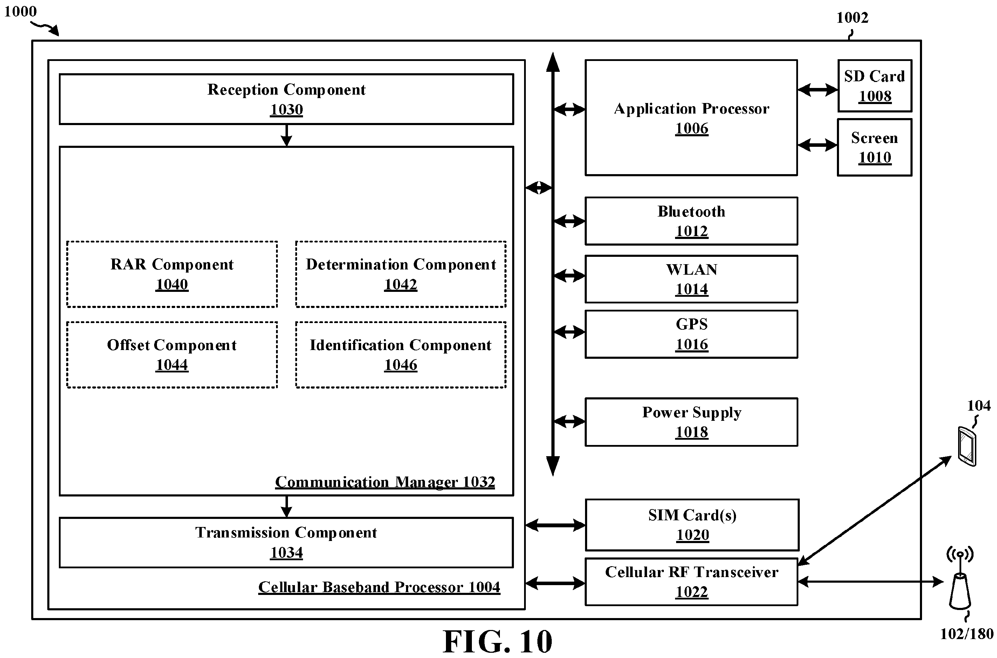

FIG. 10 is a diagram 1000 illustrating an example of a hardware implementation for an apparatus 1002. The apparatus 1002 is a UE and includes a cellular baseband processor 1004 (also referred to as a modem) coupled to a cellular RF transceiver 1022 and one or more subscriber identity modules (SIM) cards 1020, an application processor 1006 coupled to a secure digital (SD) card 1008 and a screen 1010, a Bluetooth module 1012, a wireless local area network (WLAN) module 1014, a Global Positioning System (GPS) module 1016, and a power supply 1018. The cellular baseband processor 1004 communicates through the cellular RF transceiver 1022 with the UE 104 and/or BS 102/180. The cellular baseband processor 1004 may include a computer-readable medium / memory. The computer-readable medium / memory may be non-transitory. The cellular baseband processor 1004 is responsible for general processing, including the execution of software stored on the computer-readable medium / memory. The software, when executed by the cellular baseband processor 1004, causes the cellular baseband processor 1004 to perform the various functions described *supra.* The computer-readable medium / memory may also be used for storing data that is manipulated by the cellular baseband processor 1004 when executing software. The cellular baseband processor 1004 further includes a reception component 1030, a communication manager 1032, and a transmission component 1034. The communication manager 1032 includes the one or more illustrated components. The components within the communication manager 1032 may be stored in the computer-readable medium / memory and/or configured as hardware within the cellular baseband processor 1004. The cellular baseband processor 1004 may be a component of the UE 350 and may include the memory 360 and/or at least one of the TX processor 368, the RX processor 356, and the controller/processor 359. In one configuration, the apparatus 1002 may be a modem chip and include just the baseband processor 1004, and in another configuration, the apparatus 1002 may be the entire UE (e.g., see 350 of FIG. 3) and include the aforediscussed additional modules of the apparatus 1002.

The communication manager 1032 includes a RAR component 1040 that is configured to obtain one or more RARs, where each of the one or more RARs includes a RAPID, and where each of the one or more RARs is responsive to a random access message including a preamble, e.g., as described in connection with 902. The communication manager 1032 further includes a determination component 1042 that receives input in the form of the one or more RARs from the RAR component 1040 and is configured to determine, in each of a threshold number of the one or more RARs, that the RAPID of a corresponding RAR is different than the preamble of a corresponding random access message, e.g., as described in connection with 904. The communication manager 1032 further includes an offset component 1044 that receives input in the form of the determination from the determination component 1042 and is configured to offset a carrier frequency for each of one or more subsequent random access messages in response to the determination, e.g., as described in connection with 906.

The communication manager 1032 may further include an identification component 1046 that receives input in the form of the RAPIDs and preambles from the RAR component 1040 and is configured to identify a threshold amount of consecutive mismatches between the RAPIDs and the preambles, e.g., as described in connection with 908. The carrier frequencies may each be offset (by the offset component 1044) by one of a positive value or a negative value in response to the identification by identification component 1046.

The RAR component 1040 may be further configured to obtain additional RARs, where each of the additional RARs includes an additional RAPID and is responsive to one of the subsequent random access messages including a subsequent preamble, e.g., as described in connection with 910. The determination component 1042 may receive input in the form of the additional RARs from the RAR component 1040 and may be further configured to further determine a threshold amount of consecutive mismatches between the additional RAPIDs and the subsequent preambles, e.g., as described in connection with 912. The offset component 1044 may receive input in the form of the further determination from determination component 1042 and may be further configured to offset a carrier frequency for each of one or more additional random access messages by one of a positive value or a negative value in response to the further determination, where the carrier frequencies for the one or more subsequent random access messages are offset by the other of the positive value or the negative value, e.g., as described in connection with 914.

The apparatus may include additional components that perform each of the blocks of the algorithm in the aforementioned flowcharts of FIGs. 8 and 9. As such, each block in the aforementioned flowcharts of FIGs. 8 and 9 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1002, and in particular the cellular baseband processor 1004, includes means for obtaining one or more RARs, where each of the one or more RARs includes a RAPID, and where each of the one or more RARs is responsive to a random access message including a preamble. The apparatus 1002, and in particular the cellular baseband processor 1004, also includes means for determining, in each of a threshold number of the one or more RARs, that the RAPID of a corresponding RAR is different than the preamble of a corresponding random access message. The apparatus 1002, and in particular the cellular baseband processor 1004, further includes means for offsetting a carrier frequency for each of one or more subsequent random access messages in response to the determination.

In one configuration, the apparatus 1002, and in particular the cellular baseband processor 1004, may include means for identifying a threshold amount of consecutive mismatches between the RAPIDs and the preambles, where the carrier frequencies are each offset by one of a positive value or a negative value in response to the identification.

In one configuration, the means for obtaining may be further configured to obtain additional RARs, where each of the additional RARs includes an additional RAPID and is responsive to one of the subsequent random access messages including a subsequent preamble. The means for determining may be further configured to further determine a threshold amount of consecutive mismatches between the additional RAPIDs and the subsequent preambles. The means for offsetting may be further configured to offset a carrier frequency for each of one or more additional random access messages by one of a positive value or a negative value in response to the further determination, where the carrier frequencies for the one or more subsequent random access messages are offset by the other of the positive value or the negative value.

The aforementioned means may be one or more of the aforementioned components of the apparatus 1002 configured to perform the functions recited by the aforementioned means. As described *supra,* the apparatus 1002 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

Accordingly, aspects of the present disclosure allow a UE to apply CFO compensation to improve RACH success rate in response to determining mismatched RAPIDs in prior RACH attempts typically caused by an uplink Doppler shift effect in HSTs. When attempting to perform RACH with a base station, the UE may obtain one or more RARs each including a RAPID in response to transmitting random access messages each including a preamble. If the UE determines a RAPID mismatch in each of a threshold number of these RARs, where such mismatches are caused by frequency offsets (uplink Doppler shifts) of base station-received PRACHs, the UE may offset a carrier frequency for each subsequent random access message which the UE transmits. When the mismatched RAPIDs are caused by such uplink Doppler shifts, offsetting the carrier frequencies may resolve the RAPID mismatches and thereby allow the RACH success rate to be improved. Moreover, to determine the frequency direction to be applied in the offsetting in order to resolve the RAPID mismatches, the UE may identify whether a threshold amount of consecutive mismatches between the RAPIDs and the preambles exists, and the UE may offset the carrier frequencies for the subsequent random access messages by either a positive or negative value in response to the identification. If this threshold amount of consecutive RAPID mismatches does not exist, the UE may determine to change the direction of the offsetting in additional random access messages (e.g., from positive to negative or vice-versa) if the subsequent random access messages include a threshold amount of consecutive, additional RAPID mismatches caused by frequency offsets in the opposite direction. As a result, the RACH success rate may further be improved.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

**Claims**

1. A method (900) of wireless communication at a user equipment, UE, comprising:

   obtaining (902) one or more random access responses, RARs, wherein each of the one or more RARs includes a random access preamble identifier, RAPID, and wherein each of the one or more RARs is responsive to a random access message including a preamble; **characterised by**

determining (904), in each of a threshold number of the one or more RARs, that the RAPID of a corresponding RAR is different than an identifier of the preamble of a corresponding random access message; and offsetting (906) a carrier frequency for each of one or more subsequent random access messages in response to the determination.

2. The method of claim 1, wherein a number of the one or more RARs is based on a maximum number of preamble transmissions.

3. The method of claim 1, wherein each of the threshold number of the one or more RARs includes a mismatched RAPID based on a frequency offset of a physical random access channel, PRACH, received at a base station.

4. The method of claim 3, wherein the frequency offset is determined based on an expected RAPID received at the base station.

5. The method of claim 4, wherein the frequency offset is further determined based on a timing advance.

6. The method of claim 1, wherein each of the carrier frequencies are offset by a value within a range based on a random access preamble subcarrier spacing.

7. The method of claim 6, wherein the range is a function of a frequency offset of a physical random access channel, PRACH, received at a base station.

8. The method of claim 6, wherein the range is further based on a maximum Doppler shift in high-speed train, HST, deployments.

9. The method of claim 1, wherein each of the carrier frequencies are offset in response to a reference signal received power, RSRP, associated with a serving cell exceeding a threshold.

10. The method of claim 1, wherein each of the carrier frequencies are offset by a different value.

11. The method of claim 10, wherein at least one of the different values is a function of a maximum number of the one or more subsequent random access messages.

12. The method of claim 1, wherein one or more of the carrier frequencies are offset by a same value.

13. The method of claim 1, further comprising:
identifying a threshold amount of consecutive mismatches between the RAPIDs and the preambles, wherein the carrier frequencies are each offset by one of a positive value or a negative value in response to the identification.

14. The method of claim 1, further comprising:

obtaining additional RARs, wherein each of the additional RARs includes an additional RAPID and is responsive to one of the subsequent random access messages including a subsequent preamble;
further determining a threshold amount of consecutive mismatches between the additional RAPIDs and the subsequent preambles; and
offsetting a carrier frequency for each of one or more additional random access messages by one of a positive value or a negative value in response to the further determination;
wherein the carrier frequencies for the one or more subsequent random access messages are offset by the other of the positive value or the negative value.

15. An apparatus (1002) for wireless communication, comprising:

means (1040) for obtaining one or more random access responses, RARs, wherein each of the one or more RARs includes a random access preamble identifier, RAPID, and wherein each of the one or more RARs is responsive to a random access message including a preamble; **characterised in that** it comprises
means (1042) for determining, in each of a threshold number of the one or more RARs, that the RAPID of a corresponding RAR is different than an identifier of the preamble of a corresponding random access message; and

means (1044) for offsetting a carrier frequency for each of one or more subsequent random access messages in response to the determination.

**Patentansprüche**

1. Ein Verfahren (900) für eine drahtlose Kommunikation an einem Benutzergerät (User Equipment bzw. UE), aufweisend:

   Erhalten (902) einer oder mehrerer Direktzugriffsantworten (Random Access Responses bzw. RARs), wobei jede der einen oder der mehreren RARs eine Direktzugriffspräambel-Kennzeichnung (Random Access Preamble Identifier bzw. RAPID) enthält und wobei jede der einen oder der mehreren RARs in Antwort auf eine Direktzugriffsnachricht mit einer darin enthaltenen Präambel erfolgt,
   **gekennzeichnet durch**:

   Bestimmen (904), in jeder einer Schwellenanzahl der einen oder der mehreren RARs, dass die RAPID einer entsprechenden RAR anders als eine Kennzeichnung der Präambel einer entsprechenden Direktzugriffsnachricht ist, und
   Versetzen (906) einer Trägerfrequenz für jede einer oder mehrerer folgender Direktzugriffsnachrichten in Antwort auf die Bestimmung.

2. Verfahren nach Anspruch 1, wobei die Anzahl der einen oder der mehreren RARs auf einer maximalen Anzahl von Präambel-Sendungen basiert.

3. Verfahren nach Anspruch 1, wobei jeder aus der Schwellenanzahl der einen oder der mehreren RARs eine nicht-übereinstimmende RAPID basierend auf einem Frequenzversatz eines an einer Basisstation empfangenen physikalischen Direktzugriffskanals (Physical Random Access Channel bzw. PRACH) enthält.

4. Verfahren nach Anspruch 3, wobei der Frequenzversatz basierend auf einer an der Basisstation empfangenen erwarteten RAPID bestimmt wird.

5. Verfahren nach Anspruch 4, wobei der Frequenzversatz weiterhin basierend auf einem Timing-Advance bestimmt wird.

6. Verfahren nach Anspruch 1, wobei jede der Trägerfrequenzen um einen Wert in einem auf einem Direktzugriffspräambel-Subträgerabstand basierenden Bereich versetzt wird.

7. Verfahren nach Anspruch 6, wobei der Bereich eine Funktion eines Frequenzversatzes eines an einer Basisstation empfangenen physikalischen Direktzugriffskanals (Physical Random Access Channel bzw. PRACH) ist.

8. Verfahren nach Anspruch 6, wobei der Bereich weiterhin auf einer maximalen Doppler-Verschiebung in HST (High-Speed Train)-Anwendungen basiert.

9. Verfahren nach Anspruch 1, wobei jede der Trägerfrequenzen in Antwort darauf, dass eine mit einer dienenden Zelle assoziierte Referenzsignal-Empfangsleistung (Reference Signal Received Power bzw. RSRP) einen Schwellenwert überschreitet, versetzt wird.

10. Verfahren nach Anspruch 1, wobei jede der Trägerfrequenzen um einen anderen Wert versetzt wird.

11. Verfahren nach Anspruch 10, wobei wenigstens einer der verschiedenen Werte eine Funktion einer maximalen Anzahl der einen oder mehreren folgenden Direktzugriffsnachrichten ist.

12. Verfahren nach Anspruch 1, wobei eine oder mehrere der Trägerfrequenzen um einen gleichen Wert versetzt werden.

13. Verfahren nach Anspruch 1, das weiterhin aufweist:
Identifizieren einer Schwellengröße von aufeinanderfolgenden nicht-Übereinstimmungen zwischen den RAPIDs und den Präambeln, wobei die Trägerfrequenzen jeweils um einen positiven Wert oder einen negativen Wert in Antwort auf die Identifikation versetzt werden.

**14.** Verfahren nach Anspruch 1, das weiterhin aufweist:

Erhalten von zusätzlichen RARs, wobei jede der zusätzlichen RARs eine zusätzliche RAPID enthält und in Antwort auf eine der folgenden Direktzugriffsnachrichten mit einer darin enthaltenen folgenden Präambel erfolgt, weiterhin Bestimmen einer Schwellengröße von aufeinanderfolgenden nicht-Übereinstimmungen zwischen den zusätzlichen RAPIDs und den folgenden Präambeln, und
Versetzen einer Trägerfrequenz für jede von einer oder mehreren zusätzlichen Direktzugriffsnachrichten um einen positiven Wert oder einen negativen Wert in Antwort auf die weitere Bestimmung,
wobei die Trägerfrequenzen für die eine oder die mehreren folgenden Direktzugriffsnachrichten um den jeweils anderen des positiven Werts oder des negativen Werts versetzt werden.

**15.** Eine Vorrichtung (1002) für eine drahtlose Kommunikation, aufweisend:

Mittel (1040) zum Erhalten einer oder mehrerer Direktzugriffsantworten (Random Access Responses bzw. RARs), wobei jede der einen oder der mehreren RARs eine Direktzugriffspräambel-Kennzeichnung (Random Access Preamble Identifier bzw. RAPID) enthält und wobei jede der einen oder der mehreren RARs in Antwort auf eine Direktzugriffsnachricht mit einer darin enthaltenen Präambel erfolgt,
**gekennzeichnet durch**:

Mittel (1042) zum Bestimmen, in jeder einer Schwellenanzahl der einen oder der mehreren RARs, dass die RAPID einer entsprechenden RAR anders als eine Kennzeichnung der Präambel einer entsprechenden Direktzugriffsnachricht ist, und
Mittel (1044) zum Versetzen einer Trägerfrequenz für jede einer oder mehrerer folgender Direktzugriffsnachrichten in Antwort auf die Bestimmung.

## Revendications

**1.** Procédé (900) de communication sans fil au niveau d'un équipement d'utilisateur, UE, comprenant les étapes consistant à :

obtenir (902) une ou plusieurs réponses d'accès aléatoire, RAR, dans lesquelles chacune de la ou des RAR comprend un identifiant de préambule d'accès aléatoire, RAPID, et dans lesquelles chacune de la ou des RAR répond à un message d'accès aléatoire comprenant un préambule **caractérisé par** les étapes consistant à ;
déterminer (904), dans chacun d'un nombre seuil d'un ou plusieurs RAR, que le RAPID d'un RAR correspondant est différent d'un identifiant du préambule d'un message d'accès aléatoire correspondant ; et
décaler (906) une fréquence porteuse pour chacun d'un ou plusieurs messages d'accès aléatoire ultérieurs en réponse à la détermination.

**2.** Le procédé selon la revendication 1, dans lequel un nombre de l'un ou plusieurs RAR est basé sur un nombre maximum de transmissions de préambule.

**3.** Le procédé de la revendication 1, dans lequel chacun du nombre seuil de l'un ou plusieurs RAR comprend un RAPID non concordant basé sur un décalage de fréquence d'un canal physique à accès aléatoire, PRACH, reçu au niveau d'une station de base.

**4.** Le procédé de la revendication 3, dans lequel le décalage de fréquence est déterminé sur la base d'un RAPID attendu reçu au niveau de la station de base.

**5.** Le procédé de la revendication 4, dans lequel le décalage de fréquence est en outre déterminé en fonction d'une avance de synchronisation.

**6.** Le procédé de la revendication 1, dans lequel chacune des fréquences porteuses est décalée d'une valeur comprise dans une plage basée sur un espacement de sous-porteuse de préambule d'accès aléatoire.

**7.** Le procédé de la revendication 6, dans lequel la plage est fonction d'un décalage de fréquence d'un canal physique d'accès aléatoire, PRACH, reçu au niveau d'une station de base.

8. Le procédé de la revendication 6, dans lequel la plage est en outre basée sur un décalage Doppler maximal dans les déploiements de train à grande vitesse, HST.

9. Le procédé de la revendication 1, dans lequel chacune des fréquences porteuses est décalée en réponse à une puissance reçue de signal de référence, RSRP, associée à une cellule de service dépassant un seuil.

10. Le procédé de la revendication 1, dans lequel chacune des fréquences porteuses est décalée d'une valeur différente.

11. Le procédé de la revendication 10, dans lequel au moins une des différentes valeurs est fonction d'un nombre maximal de l'un ou plusieurs messages d'accès aléatoire ultérieurs.

12. Le procédé de la revendication 1, dans lequel une ou plusieurs des fréquences porteuses sont décalées d'une même valeur.

13. Le procédé selon la revendication 1, comprenant en outre :
l'identification d'une quantité seuil de discordances consécutives entre les RAPID et les préambules, dans lequel les fréquences porteuses sont chacune décalées d'une valeur positive ou d'une valeur négative en réponse à l'identification.

14. Le procédé selon la revendication 1, comprenant en outre :

l'obtention de RAR supplémentaires, dans lequel chacun des RAR supplémentaires comprend un RAPID supplémentaire et répond à l'un des messages d'accès aléatoire ultérieurs comprenant un préambule ultérieur ; la détermination en outre d'une quantité seuil de discordances consécutives entre les RAPID supplémentaires et les préambules ultérieurs ; et
le décalage d'une fréquence porteuse pour chacun d'un ou plusieurs messages d'accès aléatoire supplémentaires par l'une d'une valeur positive ou d'une valeur négative en réponse à la détermination supplémentaire ; dans lequel les fréquences porteuses pour le ou les messages d'accès aléatoire ultérieurs sont décalées par l'autre parmi la valeur positive ou la valeur négative.

15. Un appareil (1002) pour la communication sans fil, comprenant :
des moyens (1040) pour obtenir une ou plusieurs réponses d'accès aléatoire, RAR, dans lequel chacune de la ou des RAR comprend un identifiant de préambule d'accès aléatoire, RAPID, et dans lequel chacune de la ou des RAR répond à un message d'accès aléatoire comprenant un préambule ; **caractérisé en ce qu'**il comprend :

des moyens (1042) pour déterminer, dans chacun d'un nombre seuil de l'un ou plusieurs RAR, que le RAPID d'un RAR correspondant est différent d'un identifiant du préambule d'un message d'accès aléatoire correspondant ; et
des moyens (1044) pour décaler une fréquence porteuse pour chacun d'un ou plusieurs messages d'accès aléatoire ultérieurs en réponse à la détermination.

FIG. 1

**FIG. 2A**

**FIG. 2B**

**FIG. 2C**

**FIG. 2D**

EP 4 349 117 B1

30

FIG. 3

**FIG. 4**

**FIG. 5**

**FIG. 6**

EP 4 349 117 B1

**FIG. 7**

800

802

804 ((ᵩ))

807

RACH Configuration (Max Preamble Transmissions) 806

809

Random Access Message(s) (Preamble) 808

811

RAR(s) (RAPID) 810

813

Threshold Number

812

Determine Mismatched RAPIDs 814

818

Expected RAPID

820

Timing Advance

Determine Frequency Offset (Doppler Shift)

816

Frequency Offset

828

Range

822

Offset Carrier Frequency(s)

830

Random Access Preamble SCS

826

RSRP Serving Cell ≥ Threshold?

Subsequent Random Access Message(s) (Subsequent Preamble) 824

825

834

832

Max Doppler Shift (HST)

Identify Consecutive RAPID Mismatches

Offset Frequency By Positive Value

or

Offset Frequency By Negative Value

Additional RAR(s) 836 (Additional RAPID) 837

838

Determine Consecutive RAPID Mismatches

Offset Frequency By Negative Value

or

Offset Frequency By Positive Value

840

Offset Subsequent Carrier Frequency(s)

Additional Random Access Message(s) 842

# FIG. 8

**900**

902

Obtain One or More RARs, Where Each of the One or More RARs Includes a RAPID, and Where Each of the One or More RARs Is Responsive to a Random Access Message Including a Preamble

904

Determine, In Each of a Threshold Number of the One or More RARs, That the RAPID of a Corresponding RAR is Different Than the Preamble of a Corresponding Random Access Message

906

Offset a Carrier Frequency for Each of One or More Subsequent Random Access Messages In Response to the Determination

908

Identify a Threshold Amount of Consecutive Mismatches Between the RAPIDs and the Preambles, Where the Carrier Frequencies Are Each Offset By One of a Positive Value or a Negative Value In Response to the Identification

910

Obtain Additional RARs, Where Each of the Additional RARs Includes an Additional RAPID and is Responsive to One of the Subsequent Random Access Messages Including a Subsequent Preamble

912

Further Determine a Threshold Amount of Consecutive Mismatches Between the Additional RAPIDs and the Subsequent Preambles

914

Offset a Subsequent Carrier Frequency for Each of One or More Additional Random Access Messages By the Other of the Positive Value or the Negative Value In Response to the Further Determination

## FIG. 9

**FIG. 10**

Reception Component
1030

RAR Component
1040

Determination Component
1042

Offset Component
1044

Identification Component
1046

Communication Manager 1032

Transmission Component
1034

Cellular Baseband Processor 1004

Application Processor
1006

SD Card
1008

Screen
1010

Bluetooth
1012

WLAN
1014

GPS
1016

Power Supply
1018

SIM Card(s)
1020

Cellular RF Transceiver
1022

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017289834 A
- WO 2020166958 A